# EUROPEAN PATENT APPLICATION

(11) **EP 4 756 549 A1**
(43) Date of publication of application: **10.06.2026**
(21) Application number: 25220591.9
(22) Date of filing: 03.12.2025
(51) Int. Cl.: G05B 23/02, G05B 13/04

(54) **INDUSTRIAL EFFICIENCY OPTIMIZATION SYSTEM AND METHOD**

(30) Priority: 09.12.2024 US 202463729743 P; 02.12.2025 US 202519406178
(71) Applicant: Ingersoll-Rand Industrial U.S., Inc., Davidson, NC 28036 (US)
(72) Inventor: HAREL, Yaron, Raanana (IL)
(74) Representative: Murgitroyd & Company

(57) **Abstract**

An industrial efficiency optimization system, and method implemented thereby, monitors an industrial system that includes one or more industrial equipments and provides recommendations with respect to replacement of the one or more industrial equipments. The system generates a performance indication of the one or more industrial equipments based on a received sensor data and received recent historical data and furnishes a performance notification based on the performance indication. The system accesses industrial system constraints corresponding to the one or more industrial equipments. It further accesses an available equipment repository of analogous industrial equipments. The system then simulates options based on the accessed system constraints and accessed specification data of the available equipment repository, compares performance metrics of each option against the one or more industrial equipments, ranks the performance metrics of the options, and generates a report based on the options and respective changes in performance metrics.

## Description

### FIELD

The present disclosure relates to a method and system. Particularly, but not exclusively, the disclosure relates to a method and system which can be used to monitor an industrial environment.

### BACKGROUND

The modem industrial world requires many different types of equipment for modem manufacturing environments to work effectively and safely. It is important that this equipment is monitored to ensure that full knowledge is determined about the state of the equipment and whether it presents, for example, a safety risk or whether it needs replacing to improve the energy efficiency of the industrial environment in which the equipment is located.

Monitoring this equipment and determining its status depends on many factors and this is complex, requiring multiple inputs and substantial amounts of data processing in order to determine accurate information around the status of equipment.

It is also important to consider the performance of alternative equipment and solutions in the context of the manufacturing environment and its requirements.

### SUMMARY

Accordingly, the present disclosure relates to monitoring equipment, either on an individual level or on an equipment type level. Aspects relate to determining a level of performance of the equipment and may be utilised to generate alerts regarding the status of the equipment.

Aspects relate to a method and system which can be used to monitor an industrial environment to determine the performance level of equipment used at the industrial environment. Data is obtained from the industrial environment and used to monitor the equipment. The system determines the performance level of equipment and determines whether an alternative configuration can be used to provide the same or better levels of performance.

For example, data regarding the equipment and historical data can be used to determine how equipment is performing and whether, for example, it may be close to breaking or whether it can be replaced with something else and then determining a suitable alternative configuration which can be used to provide the same level of performance. This may be based on the data related to the wider industrial environment and the physical location, and not just the equipment specification.

Viewed from a first aspect, there is provided a method of monitoring an industrial environment. The industrial environment may be situated at a location. The method may be implemented by a processing resource. The processing resource may be hardware or software implemented. The processing resource may comprise one or more processing elements which each have a processing capacity.

The method may comprise receiving performance data from an asset located at an industrial environment. The performance data may comprise readings related to performance metrics of the asset e.g. output power for a compressor. An example performance metric for a compressor may be the energy efficiency of the compressor. The readings may be obtained using sensors mounted to the asset. The sensors may be internet-of-things (IoT) sensors or any other suitable sensor configured to obtain readings associated with a performance metric. The asset may correspond to an apparatus instance of an apparatus type. An apparatus instance means an element of the asset which represents an apparatus type. For example, if the apparatus type is compressors the apparatus instance is an individual compressor. The asset may also comprise a system comprising a plurality of apparatus types. That is to say, the asset may be a system which comprises multiple apparatus types, e.g. the system may comprise one or more compressors, one or more winches, one or more pieces of filtration equipment, one or more storage tanks and/or one or more pieces of drying equipment.

The method may further comprise providing the performance data to a trained model. This may be by providing the performance data to input nodes of the trained model. The method may also provide historical usage data to the trained model, the historical usage data associated with the asset. The historical usage data comprises usage and/or load data associated with the asset over a specified time period. The time period may be specified by a user or operative of the asset.

The method may further comprise obtaining from the trained model a performance indication associated with the asset, wherein the trained model is trained to use the performance data and the historical usage data to obtain the performance indication.

The method may further comprise obtaining performance indications associated with alternative configurations associated with the asset. The alternative configurations may comprise configurations of an instance of an apparatus type or an apparatus type.

The method may further comprise providing a recommendation associated with at least one alternative configuration.

A method in accordance with the first aspect enables the monitoring of complex equipment in order to determine whether it is working optimally or whether it is likely to require maintenance or other attention, i.e. replacing.

The trained model may be trained on performance data associated with the respective apparatus type. The training of the training model may be implemented using supervised, non-supervised or semi-supervised learning techniques.

The trained model may comprise at least one artificial neural network (ANN).

ANNs can be hardware - (neurons are represented by physical components) or software-based (computer models) and can use a variety of topologies and learning algorithms. ANNs usually have at least three layers that are interconnected. The first layer consists of input neurons. Those neurons send data on to the second layer, referred to a hidden layer which implements a function and which in turn sends the output neurons to the third layer. There may be a plurality of hidden layers in the ANN. With respect to the number of neurons in the input layer, this parameter is based on training data.

The second or hidden layer in a neural network implements one or more functions. For example, the function or functions may each compute a linear transformation or a classification of the previous layer or compute logical functions. For instance, considering that the input vector can be represented as x, the hidden layer functions as h and the output as y, then the ANN may be understood as implementing a function f using the second or hidden layer that maps from x to h and another function g that maps from h to y. So the hidden layer's activation is f(x) and the output of the network is g(f(x)).

The ANN may be trained using forward/backward propagation to optimise respective weights and biases within the at least one hidden layer.

In utilising forward/backward propagation, inputs associated with a performance metric of the equipment type are matched to a labelled output which indicates how that input matches to an performance indication of the equipment. Training the ANN to determine whether a compressor is working as it should be comprises matching input parameters to specific performance indications during the training of the ANN and then repeating this over a large number of input parameters, each assigned to a designated performance indication.

The training of the trained model may comprise associating input data combinations with output performance indications to enable the trained model to provide performance indications.

The performance indication may be further based on system constraint data associated with the asset. System constraint data describes the specification of the system at the site where the asset is located. This may describe the required output power, say, from a compressor, or the required lifting capability of a winching system. The system constraint data may also describe an industrial sector where the asset is being used e.g. food production. This can be used to discard alternative options which are not suitable for that industrial sector.

Obtaining performance indications associated with alternative configurations associated with the asset may comprise simulating virtual representations of alternative configurations of the asset. The virtual representations may comprise digital twin representations of the alternative configurations of the asset.

Providing a recommendation associated with at least one alternative configuration may comprise discarding any alternative configurations which do not meet the requirements of the asset.

Providing a recommendation associated with at least one alternative configuration may comprise providing a list of options wherein each option comprises an alternative configuration.

Further aspects may provide a computer-program product which, when executed on a processing medium, configures the processing medium to implement the steps of the first aspect..

Further aspects may provide a non-transitory storage medium configured to store instructions which, when executed by suitably configured hardware, provides instructions to a processing medium to implement the steps of the first aspect.

### BRIEF DESCRIPTION OF THE DRAWINGS

The Detailed Description is described with reference to the accompanying figures. The accompanying figures, where like reference numerals, refer to identical or functionally similar elements throughout the separate views and which, together with the detailed description below, are incorporated in and form part of the specification, serve to further illustrate various embodiments and to explain various principles and advantages all in accordance with the systems and methods disclosed herein
FIG. 1 illustrates a processing resource which can be used to implement a first embodiment;
FIG. 2 illustrates a plurality of steps which are involved in the monitoring of equipment using the processing resource in accordance with the embodiment;
FIG. 3 illustrates the flow and storage of data in accordance with the embodiment;
FIG. 3a illustrates an equipment analysis resource in accordance with the embodiment;
FIG. 4 illustrates the processes and data flow for a single equipment analysis in accordance with the embodiment;
FIG. 5 illustrates a flow of steps for site level equipment analysis in accordance with a second embodiment;
FIG. 6 illustrates a processing resource for analysing a site in accordance with the second embodiment;
FIG. 7 illustrates the processes and data flow for a site level analysis in accordance with the second embodiment; and
FIG. 8 illustrates an equipment analysis resource in accordance with the embodiment.
FIG. 9 is a block diagram illustrating an industrial environment employing an industrial efficiency optimization system for monitoring an industrial system in accordance with example embodiments of the present disclosure.
FIG. 10 is a flow diagram illustrating a process implemented by a first equipment manager program, such as the equipment manager program illustrated in FIGS. 1A and 1B, in accordance with example embodiments of the present disclosure.
FIG. 11 is a process diagram illustrating process steps for a single equipment analysis performed by the first equipment manager program, in accordance with example embodiments of the present disclosure.
FIG. 12 is a flow diagram illustrating a process implemented by a second equipment manager program, such as the equipment manager program illustrated in FIGS. 1A and 1B, in accordance with example embodiments of the present disclosure.
FIG. 13 is a process diagram illustrating process steps for a site level equipment analysis performed by the second equipment manager program, in accordance with example embodiments of the present disclosure.

### DETAILED DESCRIPTION

### Overview

Industrial systems generally comprise a network of industrial equipment including equipments or machines that support the creation and delivery of products and services that process a resource input (e.g., raw materials) into an output. For most complex industrial systems, industrial equipment process inputs into outputs that are in turn used as inputs for other industrial equipment. For example, a compressor system is a common industrial system that compresses and stores a gas such as air, which is used to power pneumatic tools in a manufacturing facility to assemble a product, such as an automobile, or the like. Industrial equipment within the industrial system (e.g., compressors, dryers, storage tanks, etc. within a compressor system) requires a delicate balance of throughput and operating conditions to function with other industrial equipment within the system to ensure the entire industrial system operates at the desired efficiency.

Accordingly, the present disclosure relates to monitoring equipment, either on an individual level or on an equipment type level. Aspects relate to determining a level of performance of the equipment and may be utilised to generate alerts regarding the status of the equipment.

Aspects relate to a method and system which can be used to monitor an industrial environment to determine the performance level of equipment used at the industrial environment. Data is obtained from the industrial environment and used to monitor the equipment. The system determines the performance level of equipment and determines whether an alternative configuration can be used to provide the same or better levels of performance.

For example, data regarding the equipment and historical data can be used to determine how equipment is performing and whether, for example, it may be close to breaking or whether it can be replaced with something else and then determining a suitable alternative configuration which can be used to provide the same level of performance. This may be based on the data related to the wider industrial environment and the physical location, and not just the equipment specification.

Viewed from a first aspect, there is provided a method of monitoring an industrial environment. The industrial environment may be situated at a location. The method may be implemented by a processing resource. The processing resource may be hardware or software implemented. The processing resource may comprise one or more processing elements which each have a processing capacity.

The method may comprise receiving performance data from an asset located at an industrial environment. The performance data may comprise readings related to performance metrics of the asset e.g. output power for a compressor. An example performance metric for a compressor may be the energy efficiency of the compressor. The readings may be obtained using sensors mounted to the asset. The sensors may be internet-of-things (IoT) sensors or any other suitable sensor configured to obtain readings associated with a performance metric. The asset may correspond to an apparatus instance of an apparatus type. An apparatus instance means an element of the asset which represents an apparatus type. For example, if the apparatus type is compressors the apparatus instance is an individual compressor. The asset may also comprise a system comprising a plurality of apparatus types. That is to say, the asset may be a system which comprises multiple apparatus types, e.g. the system may comprise one or more compressors, one or more winches, one or more pieces of filtration equipment, one or more storage tanks and/or one or more pieces of drying equipment.

The method may further comprise providing the performance data to a trained model. This may be by providing the performance data to input nodes of the trained model. The method may also provide historical usage data to the trained model, the historical usage data associated with the asset. The historical usage data comprises usage and/or load data associated with the asset over a specified time period. The time period may be specified by a user or operative of the asset.

The method may further comprise obtaining from the trained model a performance indication associated with the asset, wherein the trained model is trained to use the performance data and the historical usage data to obtain the performance indication.

The method may further comprise obtaining performance indications associated with alternative configurations associated with the asset. The alternative configurations may comprise configurations of an instance of an apparatus type or an apparatus type.

The method may further comprise providing a recommendation associated with at least one alternative configuration.

A method in accordance with the first aspect enables the monitoring of complex equipment in order to determine whether it is working optimally or whether it is likely to require maintenance or other attention, i.e. replacing.

The trained model may be trained on performance data associated with the respective apparatus type. The training of the training model may be implemented using supervised, non-supervised or semi-supervised learning techniques.

The trained model may comprise at least one artificial neural network (ANN).

ANNs can be hardware - (neurons are represented by physical components) or software-based (computer models) and can use a variety of topologies and learning algorithms. ANNs usually have at least three layers that are interconnected. The first layer consists of input neurons. Those neurons send data on to the second layer, referred to a hidden layer which implements a function and which in turn sends the output neurons to the third layer. There may be a plurality of hidden layers in the ANN. With respect to the number of neurons in the input layer, this parameter is based on training data.

The second or hidden layer in a neural network implements one or more functions. For example, the function or functions may each compute a linear transformation or a classification of the previous layer or compute logical functions. For instance, considering that the input vector can be represented as x, the hidden layer functions as h and the output as y, then the ANN may be understood as implementing a function f using the second or hidden layer that maps from x to h and another function g that maps from h to y. So the hidden layer's activation is f(x) and the output of the network is g(f(x)).

The ANN may be trained using forward/backward propagation to optimise respective weights and biases within the at least one hidden layer.

In utilising forward/backward propagation, inputs associated with a performance metric of the equipment type are matched to a labelled output which indicates how that input matches to an performance indication of the equipment. Training the ANN to determine whether a compressor is working as it should be comprises matching input parameters to specific performance indications during the training of the ANN and then repeating this over a large number of input parameters, each assigned to a designated performance indication.

The training of the trained model may comprise associating input data combinations with output performance indications to enable the trained model to provide performance indications.

The performance indication may be further based on system constraint data associated with the asset. System constraint data describes the specification of the system at the site where the asset is located. This may describe the required output power, say, from a compressor, or the required lifting capability of a winching system. The system constraint data may also describe an industrial sector where the asset is being used e.g. food production. This can be used to discard alternative options which are not suitable for that industrial sector.

Obtaining performance indications associated with alternative configurations associated with the asset may comprise simulating virtual representations of alternative configurations of the asset. The virtual representations may comprise digital twin representations of the alternative configurations of the asset.

Providing a recommendation associated with at least one alternative configuration may comprise discarding any alternative configurations which do not meet the requirements of the asset.

Providing a recommendation associated with at least one alternative configuration may comprise providing a list of options wherein each option comprises an alternative configuration.

Further aspects may provide a computer-program product which, when executed on a processing medium, configures the processing medium to implement the steps of the first aspect..

Further aspects may provide a non-transitory storage medium configured to store instructions which, when executed by suitably configured hardware, provides instructions to a processing medium to implement the steps of the first aspect.

### Description of Example Embodiments

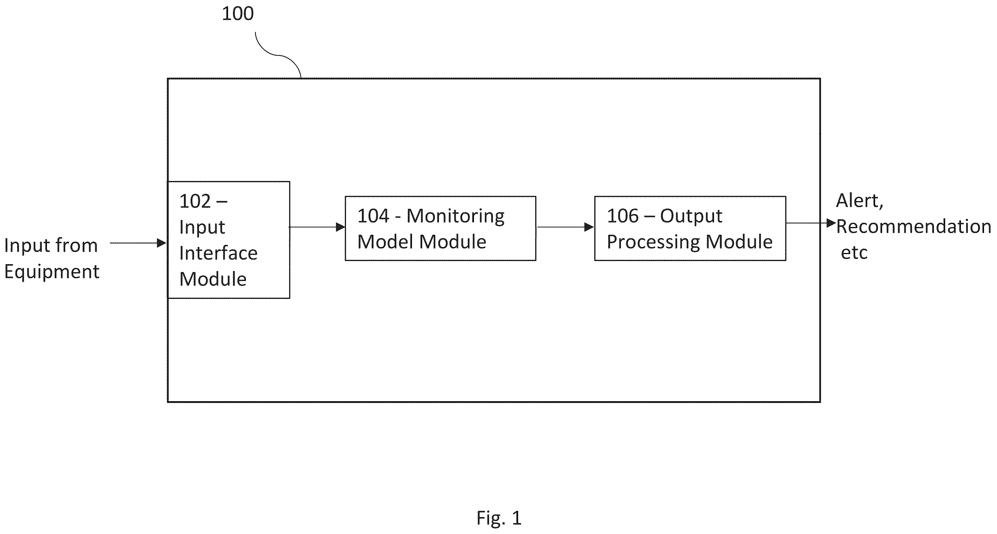

We now illustrate, with reference to FIGS. 1 to 4, how a processing resource 100 is used to implement monitoring of equipment at a location or at a plurality of locations.

The processing resource 100 comprises an input interface module 102, a monitoring model module 104 and an output processing module 106 and we will now describe how they work together to provide the monitoring of equipment at a location or at a plurality of locations.

The input interface module 102 is configured to receive data from at least one piece of equipment of an equipment type. For example, the data may be transmitted from an IoT sensor mounted to the equipment or a part of the equipment to the input interface module 102.

The data may be transmitted from the equipment (or the IoT device mounted to the equipment) to the input interface module 102 using any suitable telecommunications protocol or medium (e.g. serial connection, input/output, IP based etc). The data may be transmitted responsive to a request from the processing resource 100 to the respective piece of equipment.

Alternatively or additionally the transmission may occur automatically and without a request from the processing resource. That is to say, the input interface module 102 is constantly polling the equipment (e.g. compressor or sensor) or the attached IoT device for the required data readings and the equipment (or the IoT device if necessary) provides the data to the processing resource 100.

The piece of equipment may be an apparatus (e.g. a compressor) which is located at a physical location. The data may be collected by a sensor mounted to the equipment at the location and then transmitted to the input interface module 102. The sensor may be an internet-of-things (IoT) device. The data collected by the sensor may be dynamic data. Static data may also be stored in a local storage provision after it is input by a person with knowledge of the equipment. Static data may alternatively or additionally be retrieved from a data source relating to the piece of equipment. The data source may store the information associated with the specification of the equipment.

In the example of a compressor, the static data may, for example, comprise one or more of horse power for that compressor, rated pressure (i.e. the pressure the compressor was set up to run at), output flow at maximum power, specific power, air tank capacity, the type of compression being used by that compressor. This static data may be input by an operator of the compressor, say, or may be stored in a database where the horse power, rated pressure etc are each identified as fields in the database.

The dynamic data may, for example, comprise one or more of pressure measured on the compressor (for example, by a sensor mounted to the compressor or a production line on which the compressor is worked), a measure of air flow generated by the compressor, a dew point temperature of air compressed by the compressor or output by the compressor, the power measured on the compressor, the machine operation state (e.g. running, stopped, half-loaded etc) and the maintenance situation (e.g. warning, shutdown).

The static data may be stored at the processing resource 100 and not be transmitted from the apparatus with the dynamic data.

The input interface module 102, on receiving data, is configured to process the data when it is received from the equipment. The input interface module may be configured to apply filtering, validation and verification checks on the data in order to remove any values which are likely not to be accurate representations of what that equipment has provided. Validation and verification checks may be performed using an identifier for the equipment which is provided to the equipment during an onboarding procedure.

The monitoring model module 104 is configured to receive the processed data from the input interface module 102. The monitoring model module 104 is configured to provide the received data to at least one artificial neural network (ANN) which will be described later.

In the example of a compressor, for each type of compressor (which may also be used as an input to the neural network) a range of input parameters related to measured input power may be taken as inputs and then used in the forward/backward propagation process to match to a labelled output of efficiency. A first labelled outputs may associate the inputs with a super efficient compressor, say (i.e. one working in the best way it can) and a second labelled output may associate the inputs with a faulty or inefficient compressor (which may need replacing or even present danger to those working in the environment around the compressor. The training may enable the model to score the compressor based on the received input. For example, a score of 1 may indicate a faulty or inefficient compressor whereas a score of 10 may indicate an efficient, well functioning compressor. Other labelled outputs may provide associate inputs with other performance levels. For example, a labelled output may associate an input with an air leak, for instance. That is to say, more generally, the training of the trained model may associate specific combinations of inputs with an output corresponding to a performance level of a piece of equipment. A range of inputs may be used to ensure the trained model can recognise a range of performance levels.

Other input parameters which impact efficiency may also be used as inputs in the training process such as, for example, frequency of maintenance, frequency of servicing, air intake temperature, number of bends in the compressed air system and operating pressure.

The training process may also train the network using further inputs which include historical data taken over a time period of, for example, 6 months. The use of the trained neural network to provide an output indicative of the performance of equipment will be described in more detail below.

The monitoring model module 104 deploys a neural network which is trained to receive input parameters from at least one apparatus of an equipment type (e.g. compressors) and provide an output which indicates the performance of that equipment type at the location or across the locations where an equipment type is being utilised.

The output from the monitoring model module 104 is provided to the output processing module 106. The output processing module 106 receives the output and processes the output to enable it to be provided to entities external to the processing resource 100. This may be in the form of a notification which contains an indication of the optimisation of the equipment or equipment type. This may be a request to a recommendation module which requests information relating to other equipment which may work at a required efficiency or level of optimisation.

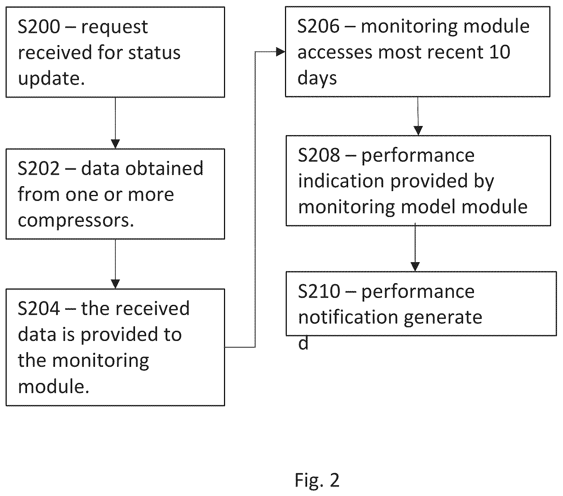

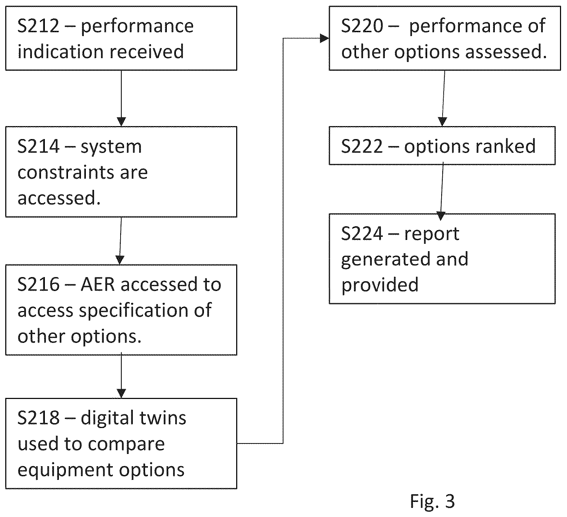

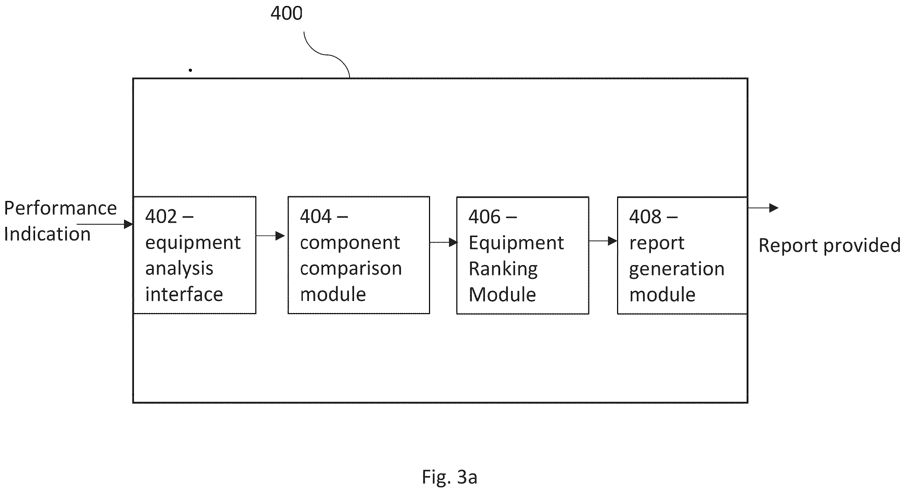

We will now describe, with reference to FIGS. 2 and 3, how the processing resource 100 monitors apparatus to determine whether it is performing as it should be and whether it can be improved. This uses the example of a group of compressors at a site. It will be understood that this is just an example and that other apparatus could also be monitored. Examples of other apparatus may include, without limitation, power tools, lifting systems, pumping equipment and fastening systems. Where a performance metric such as efficiency is described below in relation to a compressor, this should be taken to be an example and it would be understood that a similar metric in respect of a lifting system could be monitored in a similar way.

In a step S200, a request is received at the processing resource 100 to provide a status update regarding the compressors at site A. The request is processed by the input interface module. The processing identifies the equipment or type of equipment and the subject of the request e.g. performance level. Site A may be a production environment or another environment where compressors are utilised. Site A may be geographically distinct from the location of the processing resource 100. For instance, site A may be a production environment located in United States and the processing resource 100 may be located in Europe.

The request (process 300) may be received from a client device or from a control management unit which is configured to obtain performance data for the compressors. The request may be initiated as part of an automatic process which is repeated at a regular frequency to maintain monitoring of the compressors at regular intervals during the day. The request may be initiated responsive to a human user at the client device who wants to obtain a status update regarding the performance of the compressors at a single site or across multiple sites. The request in step S200 may be omitted from the method. As set out above, the processing resource 100 may automatically (i.e. without explicit request) poll the compressors for the required data and the polling may be executed at a specified frequency to maintain consistent monitoring over a time period such as a day or a week. The specified frequency may be expressed in terms of minutes, hours, days, or even months. The polling may be initiated responsive to the request in step S200.

The request in step S200 may also be automatically provided if a monitoring component detects a large drop in a performance metric, such as efficiency. This will also trigger the start of the steps described in relation to FIGS. 2 and 3. The request in step S200 may also be automatically provided if another identical (or substantially identical) piece of equipment at the same location or another location is determined to be faulty.

The data is obtained from one or more compressors of either the same or of different types which are situated at site A . The data may be obtained responsive to the request or as part of the polling of the compressors. This is step S202.

The data is received at the Input Interface Module 102 and processed by the Input Interface Module 102 at the start of the monitoring process 300. The processing may identify the source of the data (e.g. by way of IP address or other device identifier) and the specific fields of data (e.g. output flow). The processing may also validate the data to ensure that, for example, the identification of the source of data is recognised by the processing resource 100. The validation may also check that the readings of the fields of data are within specific expected bounds.

The data obtained may be stored locally in local storage 302 so it can be easily and quickly accessed when the processing resource needs the data or has capacity to process the associated request. The data may comprise static data such as, for example, horse power, rated pressure, output flow at maximum power, specific power, air tank capacity, compression type and may also comprise dynamic data such as, for example, pressure measured on the respective compressor, the flow measured on the compressor, the dew point temperature, power measured on the compressor, the machine operation state and the maintenance status. The static data and/or the dynamic data may be received as telemetry data. The static data may be obtained from storage or from an external data source (e.g. cloud).

Following the processing by the input interface module 102, the data is provided to the monitoring model module 104. This is step S204. This module takes each of the data fields, e,g, each of the static data fields and each of the dynamic data fields, as an input.

The type of compressor may be received at one input node (in the form of a numerical value) and the data readings received from the IoT device mounted to the respective compressor is received at the other input nodes. Alternatively, the type of compressor may be omitted. These data readings may include values such as, for example, horsepower, rated pressure, output flow at maximum power, specific power, air tank capacity, compression type,pressure measured on the respective compressor, the flow measured on the compressor, the dew point temperature, power measured on the compressor, the machine operation state and the maintenance status. Each of these is an example of a performance metric which may be read from the apparatus. Generally speaking, the performance metrics of the apparatus are provided to the monitoring model module 104 either on request or by polling the apparatus or respective IoT sensors mounted to the apparatus. The monitoring model module 104 may also access historical data related to the use of the apparatus. The historical data is obtained from storage 306. The historical data may comprise readings which set out the settings of the apparatus. This enables inferences to be drawn about whether the apparatus has been switched on, which settings are being used and how much electrical power is being used.

In one example, the monitoring model module 104 may be configured to access the most recent 10 days of data corresponding to the compressors at the respective site. This is step S206. The historical data contains readings over the specified time period, i.e. 10 days, which detail the horsepower, rated pressure, output flow at maximum power, specific power, air tank capacity, compression type, pressure measured on the respective compressor, the flow measured on the compressor, the dew point temperature, power measured on the compressor, the machine operation state and the maintenance status as well as readings indicating when the compressor has been switched on.

Accessing the most recent 10 days of data is performed as a process 304 which accesses the collected data (both static and dynamic) which has been received from the respective compressors and stored in storage 306. The most recent 10 days of data may also be input to input nodes of the ANN implemented by the monitoring model module 104 with the real-time readings obtained from the apparatus in step S204. Each field of historical data and each reading has an input node in the ANN. The received real-time readings and the historical data are both provided to respective inputs in the ANN implemented by the monitoring model module. ANNs can be hardware - (neurons are represented by physical components) or software-based (computer models) and can use a variety of topologies and learning algorithms. ANNs usually have at least three layers that are interconnected. The first layer consists of input neurons. Those neurons send data on to the second layer, referred to a hidden layer which implements a function and which in turn sends the output neurons to the third layer. There may be a plurality of hidden layers in the ANN. With respect to the number of neurons in the input layer, this parameter is based on training data.

The second or hidden layer in a neural network implements one or more functions. For example, the function or functions may each compute a linear transformation or a classification of the previous layer or compute logical functions. For instance, considering that the input vector can be represented as x, the hidden layer functions as h and the output as y, then the ANN may be understood as implementing a function f using the second or hidden layer that maps from x to h and another function g that maps from h to y. So the hidden layer's activation is f(x) and the output of the network is g(f(x)).

The ANN may be trained using forward/backward propagation to optimise respective weights and biases within the at least one hidden layer.

In utilising forward/backward propagation as a training approach, inputs associated with a performance metric of the equipment type and historical data are matched to a labelled output which indicates how that input matches to a performance metric of the equipment. In the example of a compressor, the ANN may be trained to determine that the compressor is not performing as it should or may be subject to a problem.

For example, inputs which indicate a compressor is working at maximum output power in real-time and historical input which also indicates an average output power over a 10 day period which is also at maximum output power may be matched to an output which says the compressor is being subjected to excessive load and could lead to overheating or at at least over-cycling.

In another example, inputs which indicate the dew point temperature is at an average over the course of a day which is higher than the average over a course of the previous 30 days may indicate a faulty dryer following the compressor and this may be matched, in training of the model, to an output which says there is likely to be a faulty dryer following the compressor. Different industrial environments may require different dew point temperatures and a higher dew point temperature may be used to indicate that the dryer is faulty rather than a compressor.

That is to say, the training of the ANN matches input data combinations to performance indications of the apparatus as output. This can be implemented using historical data taken from the apparatus.

The ANN receives the real-time readings from the apparatus and access the historical data to analyse the performance of the apparatus and infer a risk that a problem is prevalent or even that the apparatus is working well. In another example, the output may indicate the apparatus, e.g. the compressor, is working exactly as it should.

In summary, the monitoring model module 104, in a step S208, provides a performance indication of the respective compressor as an output based on the input data. Process 308 as shown in FIG. 3 takes the input data obtained from the compressors (and processed by the input interface module 102) at a plurality of corresponding input nodes and the monitoring model module 104 provides an output indicating whether the compressor (or plurality of compressors) is working in an optimal way or whether there is a problem, e.g. a leak or overheating.

The process 310 utilises ANNs to analyse the input data (and the historical data) and provide a performance indication about the equipment (which in this example are the compressors at site A). The monitoring model module 104 may be able to access ANNs which are each trained on a specific type of equipment e.g. pumping equipment, heating equipment, production line drive equipment etc and provide a performance indication about the equipment responsive to the readings from IoT devices mounted to the equipment and historical data, if historical data is necessary or desirable.

The performance indication is then provided to the output processing module 106 which executes process 312 to generate a performance notification based on the performance indication obtained from monitoring model module 104. This is step S210.

Optionally or additionally, the performance notification may then be transmitted to the device which provided the request in step S200 or another computing device. The notification may include a text component e.g. "compressor 1 is leaking". Process 312 may simply convert the performance indication into a text-based notification using standard techniques. Process 312 may provide a structured output to process 314 containing the measurements associated with the equipment. For example, the structured output may identify fields associated with the performance metrics associated with the compressor e.g. identifier "compressor 1", specified maximum power "150 kW", actual maximum power "143 kW", specified efficiency "6.3 kW/m^3" and actual efficiency "6.8 Kw/m^3"

The effect of this is the performance of the equipment can be identified and notified to an interested entity and problems with the equipment can also be notified and identified to the interested party based on the real-time readings and the historical data.

We now describe, with reference to FIG. 3a, an equipment analysis resource 400 which receives the performance indication from the processing resource 100 and provides a recommendation based on the performance indication and the analysis of other available equipment.

The equipment analysis resource 400 is configured to receive a performance indication from the processing resource 100 and to analyse the performance indication using equipment analysis interface, component comparison module 404, equipment ranking module 406 and report generation module 408. Each of the interface and respective modules may be co-located or located remotely relative to one another. The equipment analysis resource 400 and each of the respective interface and modules may be hardware or software implemented and each of the respective interface and modules may transmit data between one another using any suitable protocol or approach.

In a step S212, the performance indication is received from the processing resource 100 at an equipment analysis interface 402. The performance indication is processed by the equipment analysis interface 402. The performance indication comprises a site identifier to identify site A, an equipment identifier to identify that the performance indication relates to the compressors and the component which indicates the performance of the compressors, i.e. that it is leaking or that it is overheating.

The equipment analysis interface 402 may then, in a step S214, access a system constraints file related to the compressors at site A. The system constraints file details all of the requirements which must be met by the compressors when in operation at site A, i.e. the minimum output power, the type of compressor, the maximum dew point temperature etc. Alternatively or additionally, the requirements may be contained in a database which is accessed in step S214, the database may be co-located with equipment analysis resource 400 or located remotely relative to the equipment analysis resource 400 and accessed using any suitable data communications protocol. This enables the equipment analysis resource 400 to perform analysis based on what is required by the compressors at site A and not simply what is specified in the product specification of the compressors which happen to be in use at site A.

In a step S216, the available equipment repository (AER) is accessed by the equipment analysis resource 400 to access the specification of other equipment options. In the example of compressors, the AER will contain the specification and requirements of each of the compression options which are available.

The component comparison module 404 obtains the data from the AER and, in a step S218, utilises the system constraints file and the specification data obtained from the AER to simulate the other options as if they were implemented at site A. This may be by utilising digital twins of the respective equipment options. The digital twin representation will provide a virtual representation of the equipment options both individually and in combination. For example, a digital twin of the wider system at site A is used to compare that system as if it included the other options identified by the AER.

In a step S220, performance metrics of each option when working in the system at site A can be compared with the system constraints file to see if the respective option works better than what is already there.

For example, if the performance indication generated by the monitoring model module 104 indicates the compressors are overheating because they are being used at maximum capacity for longer than the recommended duty cycle, then the digital twins can be used to examine other compression options under the same circumstances to see if they would be expected to overheat in the same way.

In another example, if the performance indication generated by the monitoring model module 104 indicates the compressors are working well then the simulation of other options using the digital twin representations of the other compression options may indicate that, when used at site A, those compression options use, for example, less electrical power or less water.

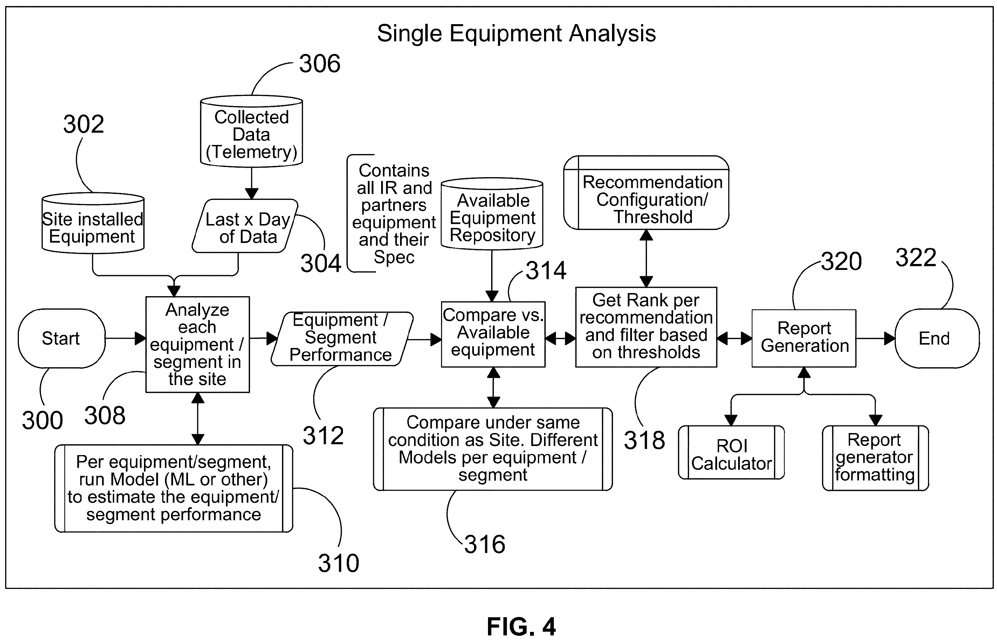

That is to say, the component comparison module 404 compares other apparatus options with the apparatus already in situ and determines performance of those options (e.g. based on maximum output power or maximum or minimum dew point temperature). This is process 314 in FIG. 4.

The performance metrics of the other options are then ranked by the equipment ranking module 406. This is process 318. This may be determining a percentage improvement in the relevant performance metric. This may be a simple percentage improvement calculation which compares the performance metric of the present compression option (i.e. the option which is already implemented at site A) with each of the options which are simulated by the component comparison module 404. The options are than ranked. This is step S222. For example, the ranking of the options may be based on user-defined thresholds. In one example, it may be specified that at one industrial environment backup capacity may be more important than energy efficiency. The process 318 may then score options based on backup capacity where options which reduce backup capacity are rated lower than others.

The options and the change in performance metric determined in step S222 are then included in a report by a report generation module 408. This is process 320. Some options may be discarded. The report generation module 408 may be configured to determine from the system constraints file that, for example, site A is a food production environment and the best performing option may be indicated, by the AER, as not being suitable for a food production environment. This will cause that option to be discarded. That is to say, the report generation module 408 may examine performance metric thresholds to determine whether the options meet those thresholds and discard the options if they do not.

The report generation module 408 may also be configured to format a report including all of the non-discarded options and return on investment (RoI) information. The formatting may be specified by the entity who provided the request in step S200. The report is formatted and provided in a step S224. This is process 322.

That is to say, analysis of equipment, even well functioning equipment, may be used to determine whether that equipment can be replaced by better performing equipment when the system constraints are examined and digital twin representations, say, are used to examine potential replacements. For example, compressors may be working at maximum efficiency but it could be that other compressors provide power output which is more appropriate for the location and may provide a better return on investment.

Additionally, the embodiment describes the use of real-time data and monitoring to estimate the performance of apparatus such as, for example, compressors. This could be used to generate an alert if the real-time data can be used to predict a fault.

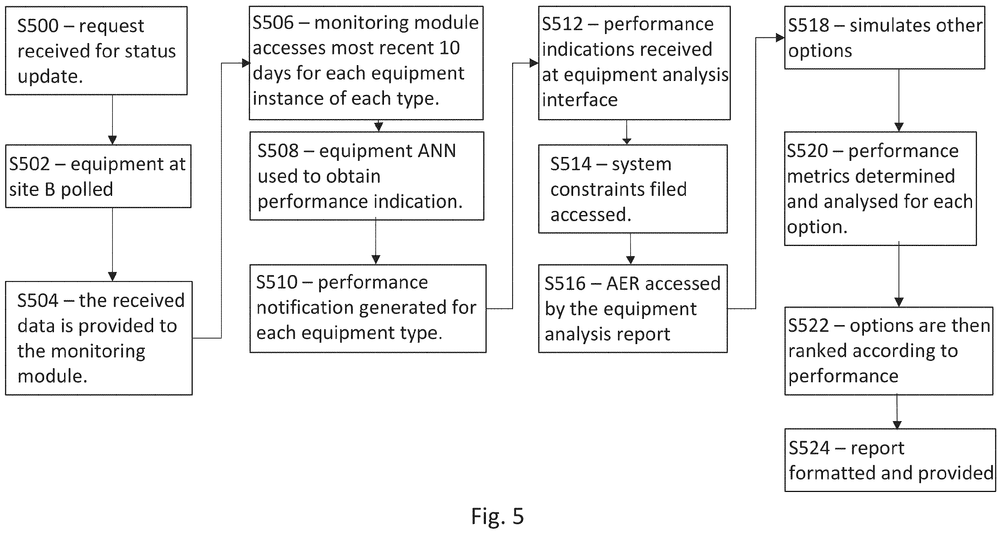

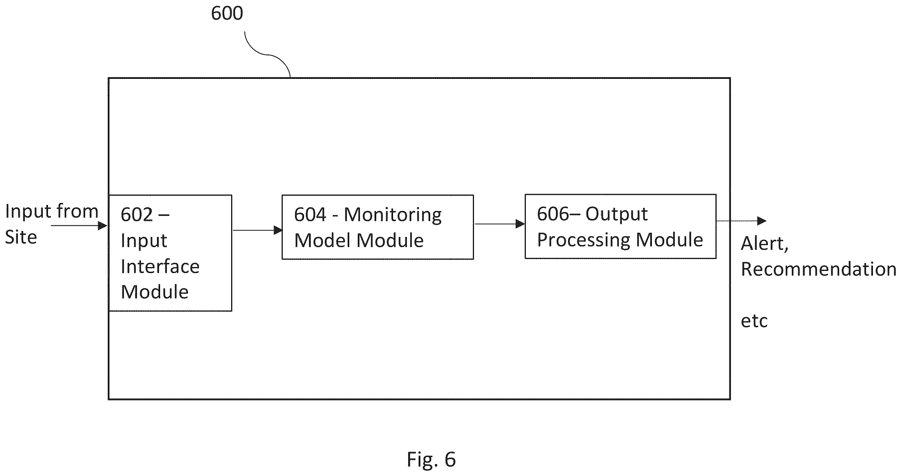

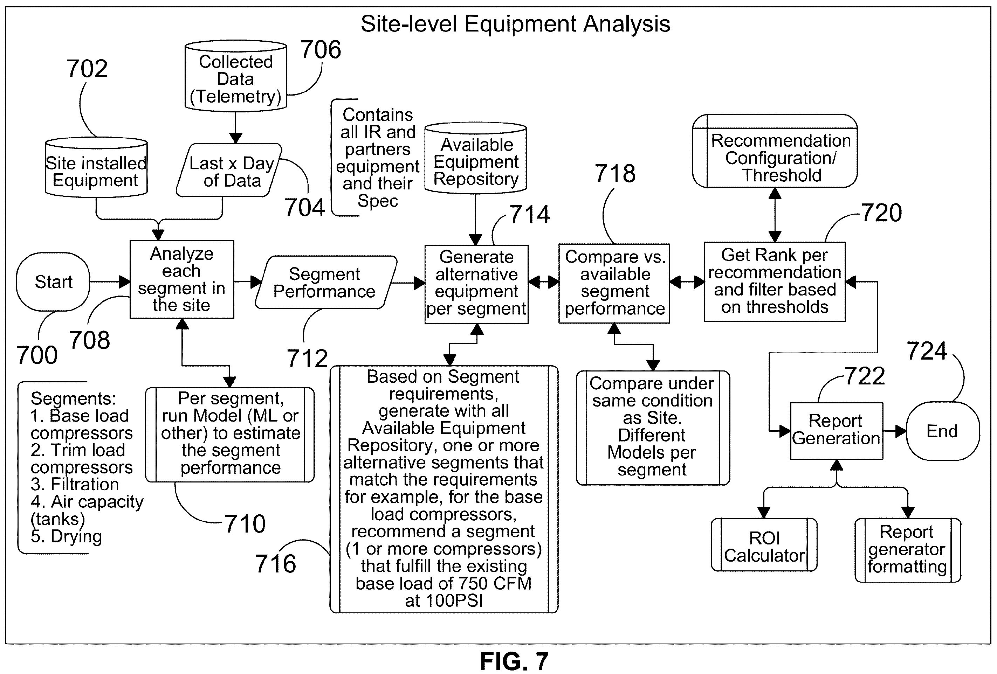

We will now describe another embodiment where a site level equipment analysis can be performed. This is with reference to FIGS. 5, 6 and 7.

Similar to the previous embodiment, in a step S500, a request may be received at the processing resource 600 to provide a status update regarding the system at site B. The request is processed by the input interface module 602. The processing extracts from the request the identifier corresponding to site B.

The processing resource 600 is configured to receive readings from the system at site B and various elements of the system at input interface module 602. This is used to analyse the performance of the various components of the system at site B. The processing resource further comprises monitoring model module 604 and output processing module 606. Each of the interface and respective modules may be co-located or located remotely relative to one another. The equipment analysis resource 600 and each of the respective interface and modules may be hardware or software implemented and each of the respective interface and modules may transmit data between one another using any suitable protocol or approach.

In this example, the system at site B comprises, for example, multiple components including, but not limited to one or more compressors (with associated dryers), one or more winches, one or more balancers and various pieces of equipment to connect these pieces of equipment together to ensure they can provide the necessary functionality at site B. Each piece of equipment has, mounted to it, IoT sensors which are configured to provide readings about the performance metrics about each equipment type. The processing resource 100 may automatically (i.e. without explicit request in step S500) poll the IoT sensors (in a step S502) for the required data and the polling may be executed at a specified frequency to maintain consistent monitoring over a time period such as a day or a week. The specified frequency may be expressed in terms of minutes, hours, days, or even months.

The data is received at the input interface module 602 and processed by the input interface module 602 at the start of the monitoring process 700. The processing may identify the source of the data (e.g. by way of IP address or other device identifier for the respective IoT sensor) and the specific fields of data (e.g. output flow of a compressor, average weight being lifted by a winch etc). The processing may also validate the data to ensure that, for example, the identification of the source of data is recognised by the processing resource 600. The validation may also check that the readings of the fields of data are within specific expected bounds.

The data obtained may be stored locally in local storage 702 so it can be easily and quickly accessed when the processing resource 600 needs the data or has capacity to process the associated request. The data may comprise both static data and dynamic data for the respective equipment type. The static data and/or the dynamic data may be received as telemetry data. The static data may be obtained from storage or from an external data source (e.g. cloud).

Following the processing by the input interface module 602, the data is provided to the monitoring model module 604. This is step S504. This module takes each of the data fields, e,g, each of the static data fields and each of the dynamic data fields, as an input. The processing may also separate the received data into equipment types. That is, static and dynamic data for compressors, static and dynamic data for winches etc.

Additionally, the monitoring model module 604 is configured to access historical data related to each equipment of each equipment type. In one example, the monitoring model module 604 may be configured to access the most recent 10 days of data corresponding to each instance of an equipment type at each site. This is step S506. For example, if a site has 6 winches and 5 compressors, historical data for all 6 winches and all 5 compressors is accessed before the compressors and winches are analysed.

Accessing the most recent 10 days of data is performed as a process 704 which accesses the collected data (both static and dynamic) which has been received from the respective equipment and stored in local storage 706.

The most recent 10 days of data may also be input to input nodes of artificial neural networks implemented by the monitoring model module 604 with the real-time readings obtained from the IoT sensors mounted to the apparatus.

The monitoring model module 604 implements an artificial neural network (ANN) for each equipment type. That is, in this example, an ANN for compressors would be initialised (in addition to an ANN for winches), an ANN for winches would be initialised and so on for each equipment type in the system at site B.

Each field of historical data for each equipment type and each reading for each equipment type has an input node in the ANN. The received real-time readings and the historical data are both provided to respective inputs in the ANN.

In utilising forward/backward propagation as a training approach, inputs associated with a performance metric of the equipment type and historical data are matched to a labelled output which indicates how that input matches to a performance metric of the equipment type. In the example of a winch, the ANN may be trained to determine that the winches are not performing as it should or may be subject to a problem.

For example, the readings taken from the winches may indicate they are frequently being used to lift weights which may be close to the upper limit of what they are built for. The ANN may be trained to recognise this by matching load data (i.e. data representing the load being lifted by the winches) to specific performance metrics. This enables loads which are close to the limit of that for which the winch is suitable to be matched to an output which identifies sustained excess load on the winch and imminent problem as the winch could be about to fail, which could be catastrophic. Therefore, if the real-time readings and the historical data for the most recent 10 days indicates the winch is regularly being pushed to its limit, the winch ANN could provide an output performance indication which says the winches are close to failure.

That is to say, the training of the ANN matches input data combinations to performance indications of the equipment type as an output. This can be implemented using historical data taken from the apparatus. This data can be taken from a specific time period and should be distinct from the last 10 days of historical data.

On providing the input data to the respective ANN, i.e. the winch ANN if winches are being analysed as part of the analysis of the system at site level B. The process 710 utilises the winch ANN to analyse the input data (and the historical data) corresponding to the reading received from the winches and provide a performance indication about the winches at site B. This is step 508. Additionally, a compressor ANN corresponding to the one or more compressors, a balancer ANN corresponding to the one or more balancers and a connector ANN corresponding to the connection equipment are also utilised by providing readings from IoT sensors connected to each respective apparatus and corresponding historical data to respective ANNs to extract performance indications about those equipment types.

By determining performance indications about each equipment type, it is possible to determine how the components of the system at site B are performing.

That is to say, each equipment type may have an associated ANN which is configured and trained to indicate problems with the equipment type. A winch ANN, for example, may be configured and trained to indicate overloading of the winches. A balancer ANN, for example, may be configured and trained to indicate over-utilisation of the balancers. A compressor ANN may be configured and trained to indicate under-utilisation of compressors. A connection ANN may be configured and trained to indicate that there is a correlation between over-or under-utilisation of a compressor and respective over- or under-utilisation of a dryer following the compressor.

The performance indications are then provided to the output processing module 606 which executes process 712 to generate a performance notification (for each equipment type) based on the performance indication obtained from monitoring model module 604. This is step S510.

Optionally or additionally, the performance notification for each equipment type may then be transmitted to the computing device which provided the request in step S500. i.e. the status request. The notification may include a text component e.g. "winches 1-5 are overloaded" or "the dew point temperature at the dryer following compressor 1 is too high". Process 712 may simply convert the performance indication into a text-based notification using standard techniques.

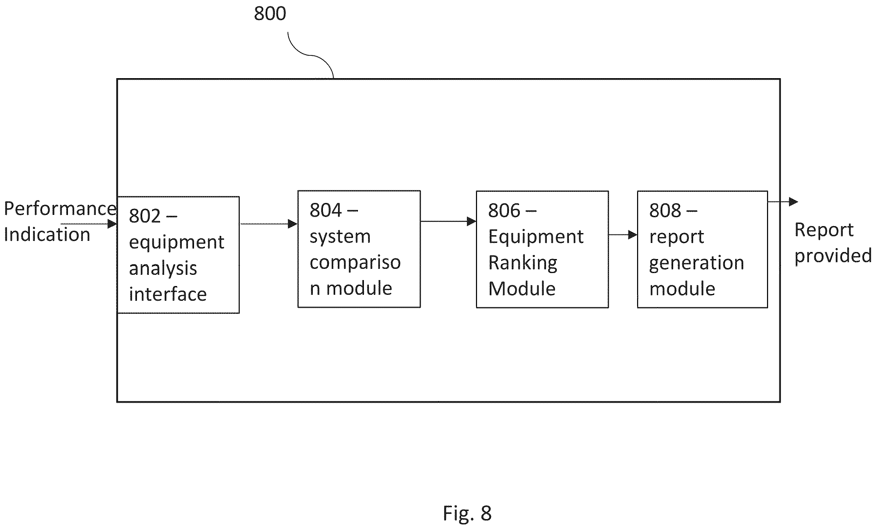

We now describe, with reference to FIG. 5 and FIG. 8, an equipment analysis resource 800 which receives the performance indications from the processing resource 600 for each equipment type.

The equipment analysis resource 800 is configured to receive a performance indication from the processing resource 600 and to analyse the performance indication using equipment analysis interface 802, system comparison module 804, equipment ranking module 806 and report generation module 808. Each of the interface and respective modules may be co-located or located remotely relative to one another. The equipment analysis resource 800 and each of the respective interface and modules may be hardware or software implemented and each of the respective interface and modules may transmit data between one another using any suitable protocol or approach.

In a step S512, the performance indications are received from the processing resource 600 at an equipment analysis interface 802. The performance indication is processed by the equipment analysis interface 802. The performance indication comprises a site identifier to identify site B, and equipment identifiers to identify the equipment types to which the performance indications relate and the performance indications provided by the respective equipment ANNs.

The equipment analysis interface 802 may then, in a step S514, access a system constraints file related to the system at site B. The system constraints file details all of the requirements which must be met by the system, e.g. maximum power from compressors, how many base load compressors are being used, the air capacity of the tanks etc. Alternatively or additionally, the requirements may be contained in a database which is accessed in step S514, the database may be co-located with equipment analysis resource 800 or located remotely relative to the equipment analysis resource 800 and accessed using any suitable data communications protocol.

This enables the equipment analysis resource 800 to perform analysis based on what is required by the system at site B and not simply what is specified in the product specification of the equipment which happens to be in use at site B.

In a step S516, the available equipment repository (AER) is accessed by the equipment analysis resource 800 to access the specification of other equipment options and not limited to the equipment types or numbers of equipment instances at the site. This is process 714

The system comparison module 804 obtains the data from the AER and, in a step S518, utilises the system constraints file and the specification data obtained from the AER to simulate the other options as if they were implemented at site B. This is process 716

This may be by utilising digital twins of the respective equipment options and a digital twin of the system at site B. The digital twin representation will provide a virtual representation of the system and the equipment options both individually and in combination. For example, a digital twin of the wider system at site B is used to compare that system as if it included the other options identified by the AER.

For example, each of the 5 compressors (and associated dryers) may be replaced (using a virtual simulation) one at a time and the performance indications determined to assess whether simply changing a single compressor (e.g. compressor 1) may be sufficient to reduce the dew point temperature at the dryer following compressor 1 or to determine if a change of all compressors is necessary or even to indicate whether changing a connecting pipe is sufficient.

In another example, a digital twin of a winch may be used to indicate that a hoist may be a better option for the location being analysed. This may be based on analysis which determines that the winch is being used to vertical movement only, where a hoist is likely a better solution. However, at a site where there are multiple winches, the digital twin of the winch may indicate that not every winch can be replaced with a hoist, especially where a winch is being used for non-vertical movement.

That is to say, each equipment type is analysed using digital twins to see if it can be replaced using more or fewer equipment instances to realise the same impact or even to determine if it can be replaced with a different configuration. More generally, each equipment type is analysed to determine whether an alternative configuration can be used. In the example of compressors, can 5 compressors of a first type be used to provide the same maximum output power as 4 compressors of a second type whilst still satisfying the system constraints at site B.

In a step S520, performance metrics of each option when working in the system at site B can be compared with the system constraints file to see if the respective option works better than what is already there. This is process 718.

For example, if the performance indications generated by the monitoring model module 604 indicates the winches are overloaded and this can be correlated to overload on the balancers, then a different configuration of winch and/or balancer may be determined to have a higher load whilst within safety constraints for the equipment and the system at site B.

That is to say, the system comparison module 804 compares other equipment options with the system already in situ and determines performance of those options by using digital twin technology to simulate those options alongside a digital twin of the system at site B.

The system comparison module 804 may also examine peripheral options to the elements of the system. For example, the system comparison module may use digital twins of filtration systems alongside digital twins of the compressors and this may be used to determine that the compressors can be improved if different filtration options are used.

The performance metrics of the other options are then ranked by the equipment ranking module 806. This is process 720. This may be determining a percentage improvement in the relevant performance metric. This may be a simple percentage improvement calculation which compares the performance metric of the present system (i.e. the option which is already implemented at site A) with each of the options which are simulated by the system comparison module 804. The options are than ranked. This is step S522.

The options and the change in performance metric determined in step S522 are then included in a report by a report generation module 408. This is process 722. Some options may be discarded. The report generation module 808 may be configured to determine from the system constraints file that, for example, site B contains explosives and that one of the options for the compressors utilises explosives that are not approved for use in the same environment. This will cause that option to be discarded. That is to say, the report generation module 808 may examine performance metric thresholds to determine whether the options meet those thresholds and discard the options if they do not.

The report generation module 808 may also be configured to format a report including all of the non-discarded options and return on investment (RoI) information. The formatting may be specified by the entity who provided the request in step S500. The report is formatted and provided in a step S224. This is process 724.

Industrial systems employed in industrial (e.g., manufacturing) environments typically require a variety of different types of equipment to function effectively and efficiently. It is important that this equipment is monitored to determine the state of the equipment to ascertain whether it is, for example, operating in a degraded manner, or whether it should be replaced to improve the efficiency of the industrial system that employs the equipment. The industrial system may further include an industrial control system configured to monitor one or more characteristics of the various industrial equipments via sensors and further control the industrial equipments based on the measured characteristics. Monitoring this equipment and determining its status is often a complex process, requiring multiple inputs and substantial amounts of data processing in order to furnish accurate information to users of the system. Monitoring of the equipment is also important to consider the performance of alternative equipment and solutions in the context of the manufacturing environment and its requirements.

Accordingly, the present disclosure is directed to an industrial efficiency optimization system, and methods implemented thereby, that monitors an industrial system to determine the performance of equipment used in the industrial system. Data is obtained from equipment of the industrial system and used to monitor the equipment. The industrial efficiency optimization system determines the performance level of the equipment and ascertains whether an alternative configuration can be used to provide the same or better levels of performance. For example, data obtained from the equipment can be used to determine how the equipment is performing, to determine whether, for example, equipment is close to failure, or to determine whether the equipment can be replaced with alternative equipment that is more efficient, and to determine a suitable alternative configuration that can be used to provide the same or higher level of performance. This determination may be based on data related to the wider industrial environment and the physical location, and not just the equipment specification. The industrial efficiency optimization system thus enables the monitoring of complex industrial systems in order to determine whether the equipment of these systems is working optimally or whether it is likely to require maintenance or other attention, e.g., replacement.

In embodiments, the industrial efficiency optimization system comprises an equipment manager program resident on a server computer coupled to the industrial system located in an industrial environment via a network. The manager program obtains data from equipment of the industrial system that is related to performance metrics of the equipment. For example, a performance metric obtained for a compressor (equipment) of a compressor system (industrial system) in a manufacturing plant (industrial environment) may be the energy efficiency of the compressor.

In embodiments, data is obtained using sensors associated with the equipment. The sensors may be internet-of-things (IoT) sensors or any other suitable sensor configured to obtain data associated with a performance metric. The data collected by the sensors may be dynamic telemetry data and/or historical data (telemetry data stored locally over time). Static data may also be stored in a local storage provision. Static data may alternatively or additionally be retrieved from a data source relating to the piece of equipment. The data source may store the information associated with the specification of the equipment. Static data describes the equipment installed in the industrial system (e.g., make, model, rated performance, etc. of the equipment), the specification of the industrial system at the site where the equipment is located, and so forth. The specification of the system, may, for example, describe the required output power, for example, from a compressor, or the required lifting capability of a winching system. The static data may also describe an industrial environment where the equipment is being used (e.g., food production, automobile manufacture, appliance assembly, etc.).

In embodiments, the industrial efficiency optimization system provides the data to a trained model. The trained model may comprise at least one artificial neural network (ANN). For example, the equipment manager program may furnish the data to input nodes of an ANN. The equipment manager program may also provide historical usage data associated with the industrial equipment to the ANN. The historical usage data comprises usage and/or load data associated with the equipment over a specified time period.

The ANN then estimates a performance indication associated with the industrial equipment from the trained model, wherein the ANN is trained to use the performance data and the historical usage data to obtain the performance indication. The performance indication may be expressed using a key performance indicator (KPI) that furnished a quantifiable measure of performance of the equipment over time.

The industrial efficiency optimization system may further obtain performance indications (expressed using the same KPI) associated with alternative configurations to the industrial equipment. The alternative configurations may comprise configurations of an instance of an industrial equipment or an industrial equipment type. The industrial efficiency optimization system then may then furnish a recommendation associated with at least one alternative configuration.

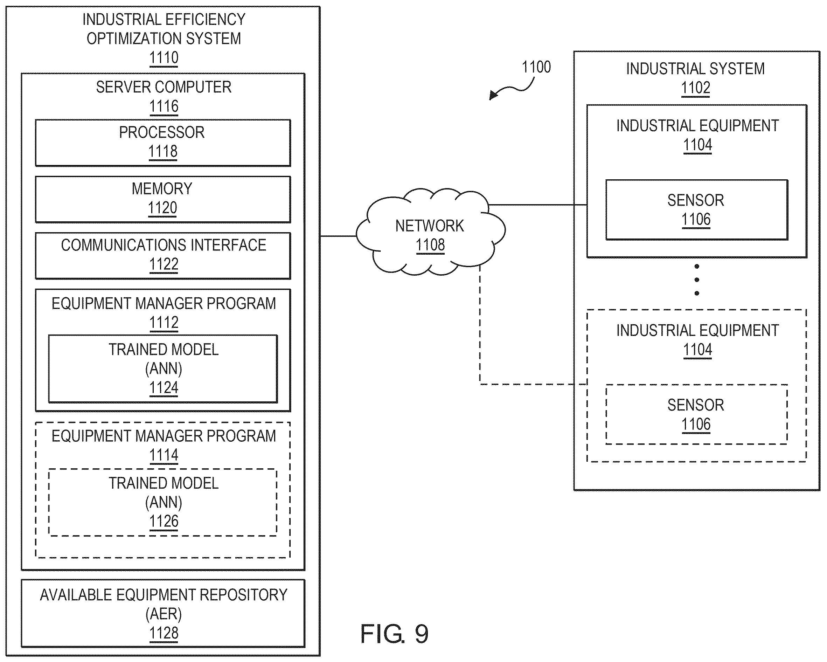

FIG. 9 illustrates an industrial environment 1100 employing an industrial system 1102 comprised of one or more industrial equipments 1104. An industrial efficiency optimization system 1110 in accordance with the present disclosure monitors the industrial system 1102 to determine the performance level of equipment 1104 employed by the industrial system 1102. For example, as shown, one or more sensors 1106 are associated with the industrial equipments 1104 and communicate data accumulated from the equipment 1104 to the industrial efficiency optimization system 1110 via the network 1108. In embodiments, the sensors 1106 may be internet-of-things (IoT) sensors or any other suitable sensor configured to obtain data associated with a performance metric for the equipment 1104.

The industrial efficiency optimization system 1110 collects telemetry data describing operation of the equipment 1104 of the industrial system 1102, via the sensors 1106, and uses the collected data to monitor operation of the equipment 1104. The industrial efficiency optimization system 1110 determines the performance level of the equipment 1104 and ascertains whether an alternative configuration can be used to provide the same or better levels of performance.

Example industrial environments 1100 may comprise any of a wide variety of industrial or manufacturing plants and/or facilities including, but not limited, to food processing plant, manufacturing plant, assembly plants, refineries, a shipping facility, and the like. Similarly, an industrial environment 1100 may include one or more industrial systems 1102 such as, for example, an air or gas compressor system, a winch system, a pump system, or the like, that employ corresponding industrial equipments 1104 such as compressors, dryers, filtration systems, winches, pumps, valves, storage tanks, and so forth. Accordingly, it will be appreciated that the industrial environment, industrial system, or industrial equipments described herein should not necessarily be limited to any particular industry or embodiment.

The industrial equipment 1104 may correspond to an instance of an industrial equipment type. For example, if the industrial equipment type is compressors, the industrial equipment instance is an individual compressor. The industrial equipment may also be a system comprising a plurality of industrial equipment types. For example, the equipment may be a system that comprises multiple industrial equipment types, e.g., the system may comprise one or more compressors, one or more units of filtration equipment, one or more storage tanks and/or one or more units of drying equipment.

In embodiments, the industrial efficiency optimization system 1110 comprises an equipment manager program 1112, 1114 resident on a server computer 1116, which is coupled to sensors 1106 in the industrial system 1102 via the network 1108. The server computer 1116 can include processor 1118, memory 1120, and communications interface 1122. Processor 1118 can include any number of processors, microcontrollers, or other processing systems. The processor 1118 can execute one or more software programs (e.g., equipment manager program 1112 and/or equipment manager program 1114) that implement the processes described herein. The processor 1118 is not limited by the materials from which it is formed or the processing mechanisms employed therein and, as such, can be implemented via semiconductor(s) and/or transistors (e.g., using electronic integrated circuit (IC) components), and so forth. The memory 1120 can include, but is not necessarily limited to: removable and non-removable memory components, such as random-access memory (RAM), read-only memory (ROM), solid state memory, flash memory, magnetic memory, optical memory, external memory, and so forth. Communications interface 1122 is operatively configured to furnish communication between the server computer 1116 and the network 1108. Network 1108 may comprise one or more of a variety of different networks, including, but not necessarily limited to: a wide-area cellular telephone network, a global system for mobile communications (GSM) network; a wireless computer communications network, such as a Wi-Fi network (e.g., a wireless local area network (WLAN) operated using IEEE 802.11 network standards); the Internet; a wide area network (WAN); a local area network (LAN); a personal area network (PAN) (e.g., a wireless personal area network (WPAN) operated using IEEE 802.15 network standards); a public telephone network; an extranet; an intranet; combinations thereof, and so forth. However, this list is provided by way of example only and is not meant to limit the present disclosure. Further, the communications interface 1122 can be configured to communicate with a single network or multiple networks across different access points.

Equipment manager program 1112 and/or equipment manager program 1114, which may be stored as executable program instruction on memory 1120, are executed by the processor 1118 of the server computer 1116. In general, equipment manager program 1112 and/or equipment manager program 1114 monitors and/or controls industrial equipments 1104 at a location or a plurality of locations. The communications interface 1122 is configured to receive data from at least one piece of equipment of an equipment type (i.e., industrial equipment 1104). For example, the data may be transmitted from an IoT sensor (i.e., sensor 1106) mounted to the industrial equipment 1104 or a component of the industrial equipment 1104 to the communications interface 1122.

The data may be transmitted from the industrial equipment 1104 (or the sensor 1106 mounted to the industrial equipment 1104) to the communications interface 1122 via network 1108 using any suitable telecommunications protocol or medium (e.g., serial connection, input/output, IP based, etc.). The data may be transmitted responsive to a request from the server computer 1116 to the respective industrial equipment 1104, and/or the sensor(s) 1106 associated therewith. Alternatively, or additionally, the transmission may occur automatically and without a specific request from the server computer 1116. For example, the server computer 1116 may constantly poll the industrial equipment 1104 or the associated sensors 1106 for the required data readings, and the industrial equipment 1104 (and/or the associated sensor(s) 1106) provides the data to the server computer 1116.

The industrial equipment 1104 may comprise an asset (e.g., a compressor) that is located at a physical location within the industrial environment. The data may be collected by a sensor 1106 mounted to the equipment at the location and then transmitted to server computer 1116. The sensor 1106 may be an internet-of-things (IoT) device. The data collected by the sensor may be dynamic data. Static data may also be stored in a local storage provision after it is input by a person with knowledge of the equipment. Static data may alternatively or additionally be retrieved from a data source relating to the piece of equipment. The data source may store the information associated with the specification of the equipment.

In the example of a compressor, the static data may, for example, comprise one or more of horsepower for the compressor, rated pressure (i.e., the pressure the compressor was set up to run at), output flow at maximum power, specific power, air tank capacity, the type of compression being used by that compressor. This static data may be input by an operator of the compressor, say, or may be stored in a database where the horsepower, rated pressure, etc. are each identified as fields in the database.

The dynamic data may, for example, comprise one or more of pressure measured on the compressor (for example, by a sensor mounted to the compressor or a production line on which the compressor is worked), a measure of airflow generated by the compressor, a dew point temperature of air compressed by the compressor or output by the compressor, the power measured on the compressor, the machine operation state (e.g., running, stopped, half-loaded, etc.) and the maintenance situation (e.g., warning, shutdown). The static data may be stored on the server computer 1116 and not be transmitted from the industrial equipment with the dynamic data.

The server computer 1116, on receiving data, is configured to process the data when it is received from the equipment. The server computer may be configured to apply filtering, validation, and verification checks on the data in order to remove any values that are likely not to be accurate representations of what that equipment has provided. Validation and verification checks may be performed using an identifier for the equipment that is provided to the industrial equipment during an onboarding procedure.

In embodiments, the industrial efficiency optimization system 1110 provides the performance data (dynamic and/or static) to a trained model. For example, equipment manager programs 1112, 1114 may comprise a trained model 1124, 1126, respectively. The equipment manager program 1112, 1114 is configured to receive the data from the communications interface 1122 and furnish the performance data to input nodes of the trained model 1124, 1126. The equipment manager program 1112, 1114 may also provide historical usage data associated with the industrial equipment 1104 to the trained model 1124, 1126. The historical usage data comprises usage and/or load data associated with the industrial equipment 1104 over a specified time period. The time period may be specified by a user or operative of the industrial system 1102, industrial efficiency optimization system 1110, or the like. The trained model 1124, 1126 may be trained with performance data associated with the respective industrial equipment type. The training of the trained model 1124, 1126 may be implemented using supervised, non-supervised, or semi-supervised learning techniques.

In embodiments, the trained model 1124, 1126 may comprise at least one artificial neural network (ANN). ANNs can be hardware - (neurons are represented by physical components) or software-based (computer models) and can use a variety of topologies and learning algorithms. ANNs usually have at least three layers that are interconnected. The first layer consists of input neurons. Those neurons send data on to a second layer, referred to a hidden layer which implements a function and which in turn sends the output neurons to a third layer. There may be a plurality of hidden layers in the ANN. With respect to the number of neurons in the input layer, this parameter is based on training data. The second or hidden layer in a neural network implements one or more functions. For example, the function or functions may each compute a linear transformation or a classification of the previous layer or compute logical functions. For instance, considering that the input vector can be represented as *x,* the hidden layer functions as *h* and the output as *y,* then the ANN may be understood as implementing a function *f* using the second or hidden layer that maps from x to *h* and another function g that maps from *h* to *y.* So, the hidden layer's activation is*f*(*x*) and the output of the network is *g*(*f*(*x*)).

The ANN may be trained using forward/backward propagation to optimize respective weights and biases within the at least one hidden layer. In utilizing forward/backward propagation, inputs associated with a performance metric of the equipment type are matched to a labeled output which indicates how that input matches a performance indication of the equipment. Training the ANN to determine whether a compressor is working as it should be comprises matching input parameters to specific performance indications during the training of the ANN and then repeating this over a large number of input parameters, each assigned to a designated performance indication. The training of the trained model may comprise associating input data combinations with output performance indications to enable the trained model to provide performance indications.

In embodiments, the industrial efficiency optimization system 1110 may obtain a performance indication associated with the industrial equipment 1104 from the trained model 1124, 1126, wherein the trained model 1124, 1126 is trained to use the performance data and the historical usage data to obtain the performance indication. The industrial efficiency optimization system 1110 may further obtain performance indications associated with alternative configurations to the industrial equipment from an available equipment repository (AER) 1128. The alternative configurations may comprise configurations of an instance of an industrial equipment 1104 or an industrial equipment type. The industrial efficiency optimization system 1110 may then provide a recommendation associated with at least one alternative configuration.

In the example of a compressor (i.e., an industrial equipment 1104), for each type of compressor (which may also be used as an input to the neural network) a range of input parameters related to measured input power may be taken as inputs, and then used in the forward/backward propagation process to match to a labeled output of efficiency. A first labeled output may associate the inputs with a high-efficiency compressor (i.e., one working in the best way it can), and a second labeled output may associate the inputs with a faulty or inefficient compressor (which may need replacing or even present danger to those working in the environment around the compressor). The training may enable the model to score the compressor based on the received input. For example, a score of 1 may indicate a faulty or inefficient compressor whereas a score of 10 may indicate an efficient, well-functioning compressor. Other labeled outputs may provide associate inputs with other performance levels. For example, a labeled output may associate an input with an air leak. That is to say, more generally, the training of the trained model may associate specific combinations of inputs with an output corresponding to a performance level of a piece of equipment. A range of inputs may be used to ensure the trained model can recognize a range of performance levels.

Other input parameters that impact efficiency may also be used as inputs in the training process such as, for example, frequency of maintenance, frequency of servicing, air intake temperature, number of bends in the compressed air system, and operating pressure.

The training process may also train the network using further inputs which include historical data taken over a time period of, for example, 6 months. The use of the trained neural network to provide an output indicative of the performance of the equipment will be described in more detail below.

The equipment manager program 1112 and equipment manager program 1114 deploy a neural network that is trained to receive input parameters from at least one industrial equipment 1104 of an equipment type (e.g., compressors) and provide an output that indicates the performance of that equipment type at the location or across the locations where an equipment type is being utilized.

The performance indication may be further based on system constraint data associated with the equipment. System constraint data describes the specification of the system at the site where the equipment is located. The specification of the system may, for example, describe the required output power, say, from a compressor, or the required lifting capability of a winching system. The system constraint data may also describe an industrial environment where the equipment is being used (e.g., food production, automobile manufacture, appliance assembly, etc.). The system constraint data can thus be used to discard alternative options which are not suitable for that industrial sector.

Obtaining performance indications of alternative configurations associated with the equipment may comprise simulating virtual representations of alternative configurations of the equipment. The virtual representations may comprise digital twin representations of the alternative configurations of the equipment. Providing a recommendation associated with at least one alternative configuration may comprise discarding any alternative configurations that do not meet the requirements of the equipment. Providing a recommendation associated with at least one alternative configuration may comprise providing a list of options wherein each option comprises an alternative configuration.

For example, data obtained from the industrial equipment 1104, combined with stored historical data, can be used to determine how industrial equipment 1104 is performing, to determine whether, for example, industrial equipment 1104 is close to failure, or to determine whether the industrial equipment 1104 can be replaced with alternative industrial equipment 1104 that is more efficient, and to determine a suitable alternative configuration that can be used to provide the same or higher level of performance. This determination may be based on data related to the wider industrial environment and the physical location, and not just the industrial equipment 1104 specification. The industrial efficiency optimization system 1110 thus enables the monitoring of complex industrial systems in order to determine whether the industrial equipment 1104 of these systems is working optimally or whether it is likely to require maintenance or other attention, e.g., replacement.

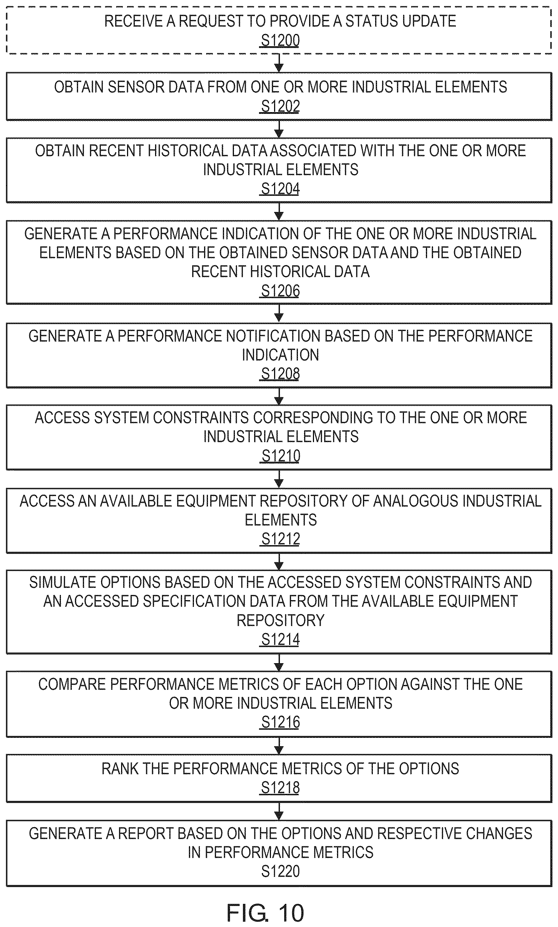

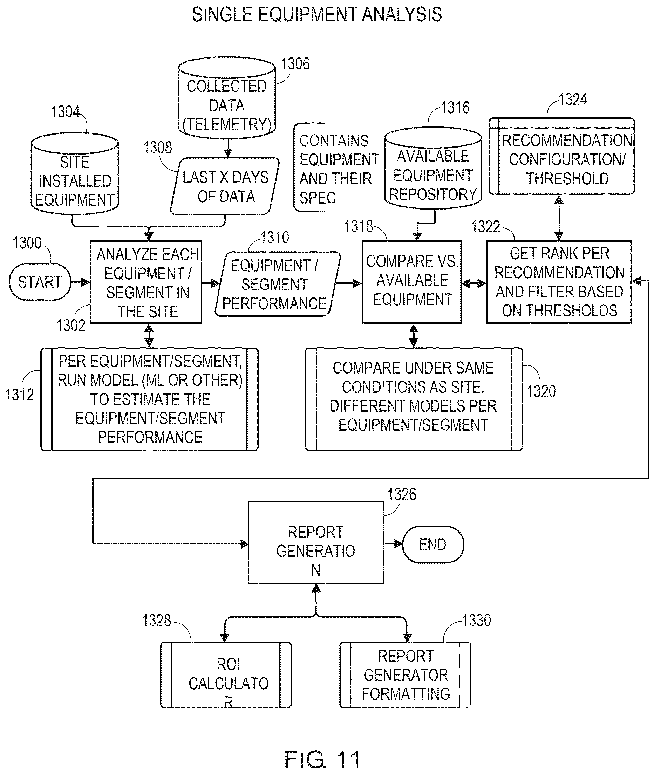

With further reference to FIGS. 10 and 11, a process implemented by equipment manager program 1112, and executed by server computer 1116, is described. The process monitors an industrial equipment 1104 (i.e., industrial equipment 1104) to determine whether it is performing as it should be and whether the performance of the industrial system 1102 can be improved by repairing, modifying, or replacing the industrial equipment 1104. The embodiments of the process implemented by equipment manager program 1112 uses as an example a group of compressors at a manufacturing site. It will be understood that the embodiment is just an example and that other industrial equipments 1104 could also be monitored. Examples of other industrial equipments 1104 may include, without limitation, power tools, lifting systems, pumping equipment, and fastening systems, and so forth. Where a performance metric (e.g., a KPI) such as efficiency is described below in relation to a compressor, this should be taken to be an example, and it would be understood that a similar metric in respect of other industrial equipments 1104 could be monitored in a similar way. The process steps of equipment manager program 1112 are also depicted in FIG. 4.

In step S1200, equipment manager program 1112 receives a request to provide a status update regarding the industrial equipments (e.g., compressors) at site A (process 1300). Equipment manager program 1112 identifies the equipment or type of equipment and the subject of the request (e.g., performance level). Site A may be a production environment or another industrial environment where industrial equipments 1104 are utilized. Site A may be geographically distinct from the location of the server computer 1116. For instance, site A may be a production environment located in the United States while the server computer 1116 may be located in Europe.

The request may be received from a client device or from a control management unit configured to obtain performance data for the compressors. The request may be initiated as part of an automatic process that is repeated at regular frequency to maintain monitoring of the compressors at regular intervals during the day. The request may be initiated responsive to a human user at the client device who wants to obtain a status update regarding the performance of the compressors at a single site or across multiple sites. The request in step S1200 may be omitted from the method. As set out above, the equipment manager program 1112 may automatically (i.e., without explicit request) poll the compressors for the required data, and the polling may be executed at a specified frequency to maintain consistent monitoring over a time period such as a day or a week. The specified frequency may be expressed in terms of minutes, hours, days, or even months. The polling may be initiated responsive to the request in step S1200.

The request in step S1200 may also be automatically provided if a monitoring component (i.e., sensor) detects a large drop in a performance metric, such as efficiency. This will also trigger the start of the steps described in relation to FIG. 10. The request in step S1200 may also be automatically provided if another identical (or substantially identical) industrial equipment 1104 at the same location or another location is determined to be faulty.

In step S1202, equipment manager program 1112 obtains sensor data from one or more industrial equipments of either the same or of different types that are situated at site A (process 1302). In embodiments, equipment manager program 1112 obtains the sensor data in response to the request or as part of the polling of the industrial equipments. The sensor data is received at the communications interface 1122 and processed by the equipment manager program 1112. In embodiments, equipment manager program 1112 identifies the source of the data (e.g., by way of IP address or other device identifier) and the specific fields of data (e.g., output flow). In embodiments, equipment manager program 1112 validates the sensor data to ensure that, for example, the identification of the source of data is recognized by the server computer 1116. In further embodiments, the validation performed by equipment manager program 1112 also checks that the readings of the fields of data are within specific expected bounds.

The sensor data obtained may be stored locally in memory 1120 so it can be easily and quickly accessed when the server computer 1116 needs the sensor data or has capacity to process the associated request. The sensor data may comprise static data such as, for example, horsepower, rated pressure, output flow at maximum power, specific power, air tank capacity, and compression type (process 1304) and may also comprise dynamic data such as, for example, pressure measured on the respective compressor, the flow measured on the compressor, the dew point temperature, power measured on the compressor, the machine operation state, and the maintenance status (process 1306). The static data and/or the dynamic data may be received as telemetry data. The static data may be obtained from storage or from an external data source (e.g., cloud). In embodiments, equipment manager program 1112 obtains each of the data fields (e.g., each of the static data fields and each of the dynamic data fields) as an input.

In an example, the type of compressor may be received at one input node (in the form of a numerical value) and the data readings received from the IoT device (i.e., sensor 1106) mounted to the respective compressor are received at the other input nodes. Alternatively, the type of compressor may be omitted. These data readings may include values such as, for example, horsepower, rated pressure, output flow at maximum power, specific power, air tank capacity, compression type, pressure measured on the respective compressor, the flow measured on the compressor, the dew point temperature, power measured on the compressor, the machine operation state, and the maintenance status. Each of these is an example of a performance metric that may be read from the industrial equipment 1104. Generally speaking, the performance metrics of the industrial equipment 1104 are provided to the equipment manager program 1112 either on request or by polling the industrial equipment 1104 or respective IoT sensors mounted to the industrial equipment 1104. The equipment manager program 1112 may also access historical data related to the use of the industrial equipment 1104. The historical data is obtained from memory 1120. The historical data may comprise readings that set out the settings of the industrial equipment 1104. This enables inferences to be drawn about whether the industrial equipment 1104 has been switched on, which settings are being used and how much electrical power is being used.

In step S1204, the equipment manager program 1112 accesses the most recent historical data corresponding to the industrial equipment 1104 at the respective site (process 1308). In an embodiment, equipment manager program 1112 accesses historical data within a period of time. For example, equipment manager program 1112 accesses the most recent 10 days of data corresponding to the industrial equipment 1104 at the respective site. The historical data contains readings over the specified time period (e.g., 10 days), which detail the horsepower, rated pressure, output flow at maximum power, specific power, air tank capacity, compression type, pressure measured on the respective compressor, the flow measured on the industrial equipment 1104, the dew point temperature, power measured on the compressor, the machine operation state, and the maintenance status as well as readings indicating when the compressor has been switched on.

In step S1206, the equipment manager program 1112, generates a performance indication of the respective industrial equipment based on the obtained sensor data and obtained historical data (process 1310). In embodiments, equipment manager program 1112 receives input data obtained from the industrial equipments 1104 at a plurality of corresponding input nodes, and the equipment manager program 1112 provides an output indicating whether the industrial equipment (or the plurality of industrial equipments) is working in an optimal way or whether there is a problem, e.g., a leak or overheating.

In an embodiment, the equipment manager program 1112 utilizes ANN to access the most recent historical data (i.e., step S1204) and to analyze the input data (i.e., step S1206). In this embodiment, the most recent historical data may also be input to input nodes of the ANN implemented by the equipment manager program 1112 with the real-time readings obtained from the industrial equipment in step S1202. Each field of historical data and each reading has an input node in the ANN. The received real-time readings and the historical data are both provided to respective inputs in the ANN implemented by the equipment manager program 1112. ANNs can be hardware- (i.e., neurons represented by physical components) or software-based (computer models) and can use a variety of topologies and learning algorithms. ANNs usually have at least three layers that are interconnected. The first layer consists of input neurons. Those neurons send data on to a second layer, referred to a hidden layer that implements a function and in turn sends the output neurons to a third layer. There may be a plurality of hidden layers in the ANN. With respect to the number of neurons in the input layer, this parameter is based on training data.

The second or hidden layer in a neural network implements one or more functions. For example, the function or functions may each compute a linear transformation or a classification of the previous layer or compute logical functions. For instance, considering that the input vector can be represented as x, the hidden layer functions as *h* and the output as *y,* then the ANN may be understood as implementing a function f using the second or hidden layer that maps from *x* to *h* and another function g that maps from *h* to *y.* So the hidden layer's activation is *f*(*x*) and the output of the network is *g*(*f*(*x*))*.*

In embodiments, the ANN may be trained using forward/backward propagation to optimize respective weights and biases within the at least one hidden layer.

In an embodiment, equipment manager program 1112 utilizes ANNs to analyze the input data (and the historical data) and to generate a performance indication about the equipment (which in this example are the compressors at site A). In embodiments, the equipment manager program 1112 accesses ANNs which are each trained on a specific type of equipment e.g., pumping equipment, heating equipment, production line drive equipment, etc., and provide a performance indication about the equipment responsive to the readings from IoT devices mounted to the equipment and historical data, if historical data is necessary or desirable (process 1312).

In utilizing forward/backward propagation as a training approach, inputs associated with a performance metric of the equipment type and historical data are matched to a labeled output which indicates how that input matches a performance metric of the equipment. In the example of a compressor, the ANN may be trained to determine that the compressor is not performing as it should or may be subject to a problem.

For example, inputs that indicate a compressor is working at maximum output power in real-time and historical input, which indicates an average output power over a 10-day period, which is also at maximum output power, may be matched to an output that says the compressor is being subjected to excessive load and could lead to overheating or at least over-cycling.

In another example, inputs that indicate the dew point temperature is at an average over the course of a day which is higher than the average over a course of the previous 30 days may indicate a faulty dryer following the compressor, and this may be matched, in the training of the model, to an output which says there is likely to be a faulty dryer following the compressor. Different industrial environments may require different dew point temperatures, and a higher dew point temperature may be used to indicate that the dryer is faulty rather than a compressor.

For example, the training of the ANN matches input data combinations to performance indications of the industrial equipment 1104 as output. This can be implemented using historical data taken from the industrial equipment 1104.

The ANN receives the real-time readings from the industrial equipment 1104, accesses the historical data to analyze the performance of the industrial equipment 1104, and infers a risk that a problem is prevalent or even that the industrial equipment 1104 is working well. In another example, the output may indicate that the industrial equipment 1104, e.g., the compressor, is working exactly as it should.

In step S1208, the equipment manager program 1112 generates a performance notification based on the performance indication. In embodiments, the performance indication comprises a site identifier to identify site A, an equipment identifier to identify that the performance indication relates to the industrial equipment 1104 and the sensor 1106 that indicates the performance of the compressors (e.g., that the compressor is leaking or overheating).

In a further embodiment, the performance notification is transmitted to the device that provided the request in step S1200 or another computing device. In this embodiment, the notification may include a text component, e.g., "compressor 1 is leaking". In an embodiment, equipment manager program 1112 converts the performance indication into a text-based notification using standard techniques. In another embodiment, the equipment manager program 1112 generates a structured output containing the measurements associated with the equipment. For example, the structured output may identify fields associated with the performance metrics associated with the compressor, e.g., identifier "compressor 1", specified maximum power "150 kW", actual maximum power "143 kW", specified efficiency "6.3 kW/m^3" and actual efficiency "6.8 Kw/m^3". As a result, the performance and potential problems of the equipment can be identified and notified to an interested entity based on the real-time readings and the historical data.

The equipment manager program 1112 may further provide a recommendation based on the performance indication and the analysis of other available equipment. In general, the equipment manager program 1112 is configured to analyze the performance indication, compare components, rank equipment, and generate a recommendation report.

In step S1210, the equipment manager program 1112 accesses a system constraints file related to the industrial equipment at site A. The system constraints file details all of the requirements that must be met by the industrial equipments 1104 when in operation at site A, e.g., the minimum output power, the type of compressor, the maximum dew point temperature, etc. Alternatively, or additionally, the requirements may be contained in a database that is accessed in step S1210, the database may be co-located with equipment manager program 1112 or located remotely relative to the equipment manager program 1112 and accessed using any suitable data communications protocol. This enables the equipment manager program 1112 to perform analysis based on what is required by the industrial equipments 1104 at site A and not simply what is specified in the product specification of the industrial equipments 1104 that happen to be in use at site A.

In step S1212, the equipment manager program 1112 accesses an available equipment repository (AER) 1128 to access the specifications of other analogous equipment options. (process 1316) In the example of compressors, the AER 1128 contains the specifications and requirements of each of the compression options that are available.

In step S1214, the equipment manager program 1112 simulates the other options as if they were implemented at site A based on the specification data accessed data from the AER 1128 and the accessed system constraints file. In embodiments, equipment manager program 1112 simulates the other options by utilizing digital twins of the respective equipment options. In this embodiment, the digital twin representation provides a virtual representation of the equipment options both individually and in combination. For example, a digital twin of the wider system at site A is used to compare the system as if it included the other options identified by the AER 1128.

In step S1216, the equipment manager program 1112 compares the performance metrics of each option when working in the system at site A to see if the respective option works better than what is already there (process 1318). For example, if the performance indication generated by the equipment manager program 1112 indicates the compressors are overheating because they are being used at maximum capacity for longer than the recommended duty cycle, the equipment manager program 1112 uses the digital twins to examine other compression options under the same circumstances to see if they would be expected to overheat in the same way. In another example, if the performance indication generated by the equipment manager program 1112 indicates the compressors are working well, then the equipment manager program 1112 simulates other options using the digital twin representations of the other compression options to indicate that, when used at site A, those compression options use, for example, less electrical power or less water. That is to say, the equipment manager program 1112 compares other industrial equipment 1104 options with the industrial equipment 1104 already *in situ* and determines performance of those options (e.g., based on maximum output power or maximum or minimum dew point temperature) (process 1320).

In step S1218, the equipment manager program 1112 ranks the performance metrics of the other options (process 1322). In embodiments, the equipment manager program 1112 ranks the performance metrics by determining a percentage improvement in the relevant performance metric. In this embodiment, the percentage improvement determination is a simple percentage improvement calculation that compares the performance metric of the present compression option (i.e., the option already implemented at site A) with each of the options that are simulated by the equipment manager program 1112. Equipment manager program 1112 then ranks the options based on the determined percentage improvement. In one embodiment, the equipment analysis program ranks the options based on user-defined thresholds. In another embodiment, it may be specified that, in one industrial environment, backup capacity may be more important than energy efficiency. In this embodiment, the equipment manager program 1112 scores options based on backup capacity where options that reduce backup capacity are rated lower than others (process 1324).

In step S1220, the equipment manager program 1112 generates a report based on the options and respective changes in performance metrics (process 1326). In some embodiments, some options may be discarded. For example, the equipment manager program 1112 determines from the system constraints file that site A is a food production environment and further determines that the best-performing option, based on the AER 1128, is not suitable for a food production environment. Thus, equipment manager program 1112 discards the option unsuitable for food production environments. That is to say, the equipment manager program 1112 examines performance metric thresholds to determine whether the options meet those thresholds and discard the options if they do not.

In a further embodiment, equipment manager program 1112 formats the report including all of the non-discarded options and return on investment (RoI) information (process 1328). In this embodiment, the formatting is specified by the entity who provided the request in step S1200 (process 1330). For example, analysis of equipment, even well-functioning equipment, may be used to determine whether that equipment can be replaced by better-performing equipment when the system constraints are examined and digital twin representations, say, are used to examine potential replacements. For example, compressors may be working at maximum efficiency, but it could be that other compressors provide power output which is more appropriate for the location and may provide a better return on investment.

In a further embodiment, the equipment manager program 1112 uses real-time data and monitoring to estimate the performance of industrial equipment 1104 such as, for example, compressors. This could be used to generate an alert if the real-time data can be used to predict a fault.

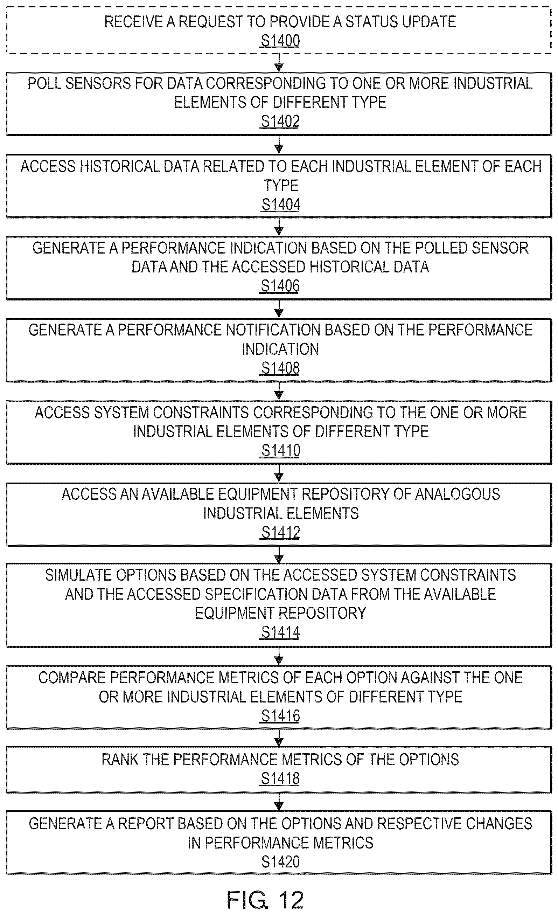

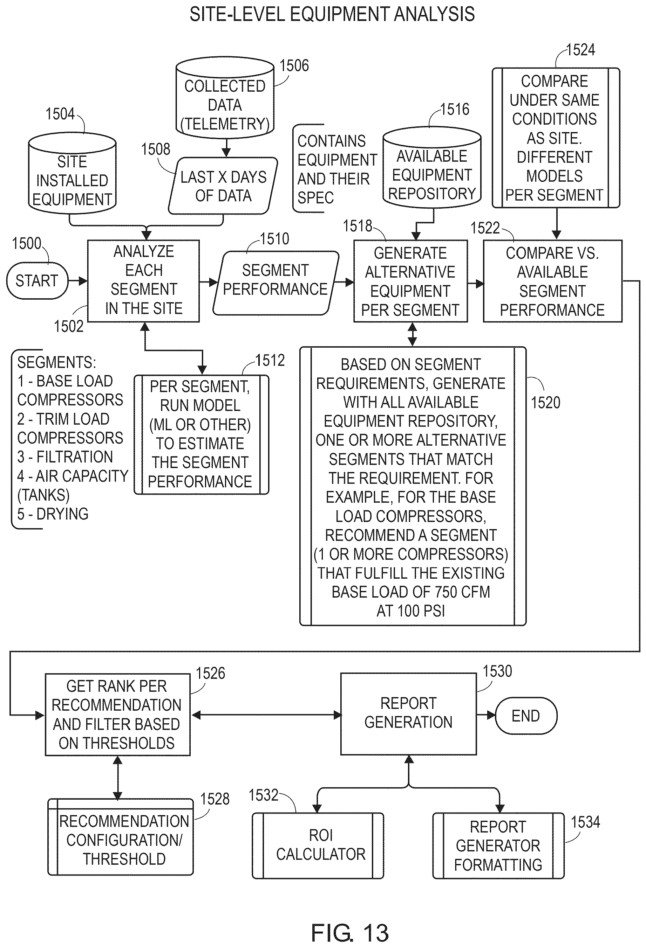

Referring now to FIGS. 12 and 13, a process is described that may be implemented by an equipment manager program 1114 to perform a site-level equipment analysis. In step S1400, equipment manager program 1114 receives a request to provide a status update regarding a system at a site B (process 1500). Responsive thereto, equipment manager program 1114 extracts from the request an identifier corresponding to site B. Equipment manager program 1114 receives readings from the system at site B and various industrial equipments of the system. These readings are used to analyze the performance of the various industrial equipments of the system at site B (process 1502).

In this example, the system at site B comprises, for example, multiple industrial equipments 1104 including, but not limited to one or more compressors (with associated dryers), one or more winches, one or more balancers, and various pieces of equipment to connect these pieces of equipment together to ensure they can provide the necessary functionality at site B. Each piece of equipment has mounted IoT sensors 1106 configured to provide readings regarding the performance metrics of each equipment type.

In step S1402, the equipment manager program 1114 polls the IoT sensors 1106 for data (process 1506). In one embodiment, equipment manager program 1114 polls the IoT sensors 1106 in response to receiving the request to provide a status update (i.e., step S1400). In another embodiment, equipment manager program 1114 polls the IoT sensors 1106 automatically (i.e., without explicit request in step S1400) for the required data. In a further embodiment, equipment manager program 1114 executes polling at a specified frequency to maintain consistent monitoring over a time period, such as a day or a week. The specified frequency may be expressed in terms of minutes, hours, days, or even months.

In embodiments, equipment manager program 1114 identifies the source of the data (e.g., by way of IP address or other device identifier for the respective IoT sensor) and the specific fields of data (e.g., output flow of a compressor, average weight being lifted by a winch, etc.). In embodiments, equipment manager program 1114 validates the data to ensure that, for example, the identification of the source of data is recognized by the server computer 1116. In a further embodiment, the validation also checks that the readings of the fields of data are within specific expected bounds.

In embodiments, the data obtained is stored locally in memory 1120 so it can be easily and quickly accessed when the equipment manager program 1114 needs the data or has capacity to process the associated request. The data may comprise both static data and dynamic data for the respective equipment type. The static data and/or the dynamic data may be received as telemetry data. The static data may be obtained from storage or from an external data source (e.g., cloud).

In an embodiment, equipment manager program 1114 takes each of the data fields, e.g., each of the static data fields and each of the dynamic data fields, as an input. In a further embodiment, equipment manager program 1114 separates the received data into equipment types. That is, static and dynamic data for compressors, static and dynamic data for winches, etc. (process 1504)

In step S1404, the equipment manager program 1114 accesses historical data related to each equipment of each equipment type (process 1508). In an embodiment, equipment manager program 1114 accesses historical data within a period of time. For example, the equipment manager program 1114 accesses the most recent 10 days of data corresponding to each instance of an equipment type at each site. In an embodiment, equipment manager program 1114 accesses historical data for industrial equipments prior to analyzing the industrial equipments. For example, if a site has six winches and five compressors, historical data for all six winches and all five compressors is accessed before the compressors and winches are analyzed.

In an embodiment, equipment manager program 1114 accesses the historical data (e.g., recent 10 days of data) which accesses the collected data (both static and dynamic) that has been received from the respective equipment and stored in memory 1120. In an embodiment, the most recent historical data may also be input to input nodes of artificial neural networks implemented by the equipment manager program 1114 with the real-time readings obtained from the IoT sensors 1106 mounted to the industrial equipment 1104.

The equipment manager program 1114 implements an artificial neural network (ANN) for each equipment type (process 1512). That is, in this example, an ANN for compressors would be initialized (in addition to an ANN for winches), an ANN for winches would be initialized, and so on for each equipment type in the system at site B.

Each field of historical data for each equipment type and each reading for each equipment type has an input node in the ANN. The received real-time readings and the historical data are both provided to respective inputs in the ANN.

In step S1406, equipment manager program 1114 generates a performance indication based on the polled sensor data and the accessed historical data (process 1510). In utilizing forward/backward propagation as a training approach, equipment manager program 1114 matches inputs associated with a performance metric of the equipment type and historical data to a labeled output which indicates how that input matches a performance metric of the equipment type. In the example of a winch, the ANN may be trained to determine that the winches are not performing as they should or may be subject to a problem.

For example, the readings taken from the winches may indicate they are frequently being used to lift weights that approach their upper design limit. The ANN may be trained to recognize this by matching load data (i.e., data representing the load being lifted by the winches) to specific performance metrics. This enables loads that are close to the limit of that for which the winch is suitable to be matched to an output that identifies sustained excess load on the winch and imminent problem as the winch could be about to fail, which could be catastrophic. Therefore, if the real-time readings and the historical data for the most recent 10 days indicate the winch is regularly lifting loads approaching its design limit, the winch ANN could provide an output performance indication that says the winches are close to failure.

For example, the training of the ANN matches input data combinations to performance indications of the equipment type as an output. This task can be implemented using historical data taken from the industrial equipment 1104. This data can be taken from a specific time period and should be distinct from the last 10 days of historical data.

On providing the input data to the respective ANN, i.e., the winch ANN if winches are being analyzed as part of the analysis of the system at site level B, equipment manager program 1114 utilizes the winch ANN to analyze the input data (and the historical data) corresponding to the reading received from the winches and provide a performance indication about the winches at site B. Additionally, equipment manager program 1114 utilizes a compressor ANN corresponding to the one or more compressors, a balancer ANN corresponding to the one or more balancers, and a connector ANN corresponding to the connection equipment by providing readings from IoT sensors 1106 connected to each respective industrial equipment 1104 and corresponding historical data to respective ANNs to extract performance indications about those equipment types.

Thus, by determining performance indications about each equipment type, it is possible to determine how the components of the system at site B are performing.

For example, each equipment type may have an associated ANN configured and trained to indicate problems with the equipment type. A winch ANN, for example, may be configured and trained to indicate overloading of the winches. A balancer ANN, for example, may be configured and trained to indicate over-utilization of the balancers. A compressor ANN may be configured and trained to indicate under-utilization of compressors. A connection ANN may be configured and trained to indicate that there is a correlation between over- or under-utilization of a compressor and respective over- or under-utilization of a dryer following the compressor.

In step S1408, equipment manager program 1114 generates a performance notification based on the performance indications. In further embodiments, equipment manager program 1114 optionally or additionally transmits the performance notification for each equipment type to the computing device that provided the request in step S1400, i.e., the status request. The notification may include a text component, e.g., "winches 1-5 are overloaded" or "the dew point temperature at the dryer following compressor 1 is too high". In an embodiment, equipment manager program 1114 may simply convert the performance indication into a text-based notification using standard techniques. In embodiments, the performance indication comprises a site identifier to identify site B and equipment identifiers to identify the equipment types to which the performance indications relate, and the performance indications provided by the respective equipment ANNs.

The equipment manager program 1114 analyzes the performance indication and generates a report. In step S1410, equipment manager program 1114 accesses a system constraints file related to the system at site B. In embodiments, the system constraints file details all of the requirements that the system must meet, e.g., maximum power from compressors, how many base load compressors are being used, the air capacity of the tanks, etc. Alternatively, or additionally, the requirements may be contained in a database accessed in step S1404, the database may be co-located with equipment manager program 1114 or located remotely relative to the equipment manager program 1114 and accessed using any suitable data communications protocol. This enables the equipment manager program 1114 to perform analysis based on what is required by the system at site B and not simply what is specified in the product specification of the equipment that happens to be in use at site B.

In step S1412, the equipment manager program 1114 accesses the available equipment repository (AER) 1128 to access the specifications of other equipment options not necessarily limited to the equipment types or numbers of equipment instances at the site (process 1516).

In step S1414, equipment manager program 1114 simulates other options as if they are implemented at site B based on the accessed system constraints file and the accessed specification data from the available equipment repository (process 1518). In embodiments, equipment manager program 1114 utilizes digital twins of the respective equipment options and a digital twin of the system at site B. The digital twin representation provides a virtual representation of the system and the equipment options both individually and in combination. For example, a digital twin of the wider system at site B is used to compare the system as if it included the other options identified by the AER 1128 (process 1520).

For example, each of the five compressors (and associated dryers) may be replaced (using a virtual simulation) one at a time, and the performance indications to assess whether simply changing a single compressor (e.g., compressor 1) may be sufficient to reduce the dew point temperature at the dryer following compressor 1 or to determine if a change of all compressors is necessary, or even to indicate whether changing a connecting pipe is sufficient.

In another example, equipment manager program 1114 uses a digital twin of a winch to indicate that a hoist may be a better option for the location being analyzed. This may be based on an analysis that determines that the winch is being used for vertical movement only, where a hoist is likely a better solution. However, at a site where there are multiple winches, the digital twin of the winch may indicate that not every winch can be replaced with a hoist, especially where a winch is being used for non-vertical movement. That is to say, the equipment manager program 1114 analyzes each equipment type using digital twins to see if it can be replaced using more or fewer equipment instances to realize the same impact or even to determine if it can be replaced with a different configuration. More generally, each equipment type is analyzed to determine whether an alternative configuration can be used. In the example of compressors, determine whether five compressors of the first type be used to provide the same maximum output power as four compressors of a second type whilst still satisfying the system constraints at site B.

In step S1416, the equipment manager program 1114 compares performance metrics of each option when working in the system at site B with the system constraints file to see if the respective option works better than what is already there (process 1524). For example, if the performance indications generated by the equipment manager program 1114 indicate the winches are overloaded and can further be correlated to overload on the balancers, then a different configuration of winch and/or balancer may be determined to have a higher load whilst within safety constraints for the equipment and the system at site B. That is to say, the equipment manager program 1114 compares other equipment options with the system already *in situ* and determines performance of those options by using digital twin technology to simulate those options alongside a digital twin of the system at site B (process 1522).

In embodiments, the equipment manager program 1114 examines peripheral options to the equipments of the system. For example, the equipment manager program 1114 may use digital twins of filtration systems alongside digital twins of the compressors, and this may be used to determine that the compressors can be improved if different filtration options are used.

In step S1418, the equipment manager program 1114 ranks the performance metrics of the other options (process 1526). In embodiments, the equipment manager program 1114 ranks the performance metrics by determining a percentage improvement in the relevant performance metric. This may be a simple percentage improvement calculation that compares the performance metric of the present system (i.e., the option that is already implemented at site A) with each of the options that are simulated by the equipment manager program 1114. The equipment manager program 1114 then ranks the options based on the determined percentage improvement.

In step S1420, the equipment manager program 1114 generates a report based on the determined options and respective changes in performance metrics (process 1530). In some embodiments, some options may be discarded. In embodiments, the equipment manager program 1114 determines from the system constraints file that, for example, site B contains explosives and that one of the options for the compressors utilizes explosives that are not approved for use in the same environment. This will cause that option to be discarded. That is to say, the equipment manager program 1114 examines performance metric thresholds to determine whether the options meet those thresholds and discard the options if they do not (process 1528).

In a further embodiment, the equipment manager program 1114 formats the report to include all of the non-discarded options and return on investment (RoI) information (process 1532). The formatting may be specified by the entity who provided the request in step S1400 (process 1534).

Embodiments in accordance with what has been described herein monitor complex equipment in order to determine whether it is working optimally or whether it is likely to require maintenance or other attention, i.e. replacing.

Monitoring a complex part of industrial equipment (e.g., Compressed Air system), assessing based on data-driven models the quality/risk/performance of existing system, and recommending potential actions/equipment that may improve system quality/risk/performance is provided by the described embodiments.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A system for monitoring an industrial environment, the system comprising:
at least one processor; and
at least one memory comprising computer program instructions, the computer program instructions configured to, with the at least one processor, instruct the system to:
receive performance data from an asset located at an industrial environment;
provide the performance data to a trained model;
provide historical usage data to the trained model, the historical usage data associated with the asset;
obtain from the trained model a performance indication associated with the asset, wherein the trained model is trained to use the performance data and the historical usage data to obtain the performance indication;
obtain performance indications associated with alternative configurations associated with the asset; and
provide a recommendation associated with at least one alternative configuration.

2. The system according to claim 1, wherein the asset corresponds to an apparatus instance of an apparatus type.

3. The system according to claim 1 or claim 2, wherein the asset corresponds to a system comprising a plurality of apparatus types.

4. The system according to any preceding claim, wherein the trained model is trained on performance data associated with the respective apparatus type.

5. A system according to one of claim 4, wherein training of the trained model comprises:
associate input data combinations with output performance indications to enable the trained model to provide performance indications.

6. The system according to any preceding claim, wherein the performance indication is further based on system constraint data associated with the asset.

7. The system according to any preceding claim, wherein the computer program instructions to obtain performance indications associated with alternative configurations associated with the asset comprises computer program instructions to simulate virtual representations of alternative configurations of the asset.

8. The system according to any preceding claim, wherein the computer program instructions to provide a recommendation associated with at least one alternative configuration comprises computer program instructions to discard any alternative configurations that do not meet the requirements of the asset.

9. The system according to any preceding claim, wherein the computer program instructions to provide a recommendation associated with at least one alternative configuration comprises computer program instructions to provide a list of options wherein each option comprises an alternative configuration.

10. A method of monitoring an industrial environment, the method implemented by a processing resource, the method comprising:
receiving performance data from an asset located at an industrial environment;
providing the performance data to a trained model;
providing historical usage data to the trained model, the historical usage data associated with the asset;
obtaining from the trained model a performance indication associated with the asset, wherein the trained model is trained to use the performance data and the historical usage data to obtain the performance indication;
obtaining performance indications associated with alternative configurations associated with the asset; and
providing a recommendation associated with at least one alternative configuration.

11. A method according to claim 10, wherein the trained model is trained on performance data associated with the respective apparatus type.

12. A method according to claim 10 or claim 11, wherein the trained model comprises at least one artificial neural network.

13. A method according to any one of claims 10 to 12, wherein obtaining performance indications associated with alternative configurations associated with the asset comprises simulating virtual representations of alternative configurations of the asset.

14. A method according to any one of claims 10 to 13, wherein the virtual representations comprise digital twin representations of the alternative configurations of the asset.

15. A method according to any one of claims 10 to 14, wherein providing a recommendation associated with at least one alternative configuration comprises discarding any alternative configurations that do not meet the requirements of the asset.
